(19) Europäisches Patentamt
European Patent Office
Office européen des brevets

(11) **EP 4 443 530 A1**

(12) **EUROPEAN PATENT APPLICATION**

(43) Date of publication:
**09.10.2024 Bulletin 2024/41**

(21) Application number: **24162522.7**

(22) Date of filing: **10.03.2024**

(51) International Patent Classification (IPC):
***H01M 4/04*** *(2006.01)* ***H01M 4/13*** *(2010.01)*
***H01M 4/131*** *(2010.01)* ***H01M 4/133*** *(2010.01)*
***H01M 4/134*** *(2010.01)* ***H01M 4/139*** *(2010.01)*
***H01M 4/1391*** *(2010.01)* ***H01M 4/1393*** *(2010.01)*
***H01M 4/1395*** *(2010.01)* ***H01M 10/0525*** *(2010.01)*
***H01M 10/054*** *(2010.01)* ***H01M 10/0562*** *(2010.01)*
***H01M 10/0585*** *(2010.01)* ***H01M 50/474*** *(2021.01)*
***H01M 50/477*** *(2021.01)* ***H01M 4/38*** *(2006.01)*
***H01M 10/052*** *(2010.01)* ***H01M 10/056*** *(2010.01)*

(52) Cooperative Patent Classification (CPC):
**H01M 10/052; H01M 4/0404; H01M 4/13; H01M 4/131; H01M 4/133; H01M 4/134; H01M 4/139; H01M 4/1391; H01M 4/1393; H01M 4/1395; H01M 4/38; H01M 4/382; H01M 10/0525; H01M 10/054; H01M 10/056;**

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041128**

(71) Applicant: **Ricoh Company, Ltd.**
**Tokyo 143-8555 (JP)**

(72) Inventors:
- **Goto, Shun**
  **Tokyo, 143-8555 (JP)**
- **Li, Muxin**
  **Tokyo, 143-8555 (JP)**
- **Kida, Hitoshi**
  **Tokyo, 143-8555 (JP)**
- **Higashi, Ryuji**
  **Tokyo, 143-8555 (JP)**
- **Ohya, Kayato**
  **Tokyo, 143-8555 (JP)**
- **Nakajima, Satoshi**
  **Tokyo, 143-8555 (JP)**
- **Kuriyama, Hiromichi**
  **Tokyo, 143-8555 (JP)**

(74) Representative: **Marks & Clerk LLP**
**15 Fetter Lane**
**London EC4A 1BW (GB)**

(54) **METHOD OF MANUFACTURING ELECTRODE, ELECTRODE, ELECTRODE MANUFACTURING APPARATUS, METHOD OF MANUFACTURING ELECTROCHEMICAL ELEMENT, AND ELECTROCHEMICAL ELEMENT MANUFACTURING APPARATUS**

(57) A method of manufacturing an electrode is provided that includes applying a first liquid composition including a polymerizable compound and a first solvent onto an electrode base to form a first liquid composition layer, polymerizing the polymerizable compound to form a resin structure layer, applying a second liquid composition including an active material and a second solvent onto the electrode base to form a second liquid composition layer, and removing the first solvent and the second solvent.

FIG. 7A

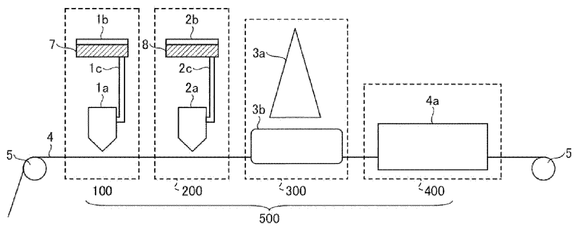


EP 4 443 530 A1

(52) Cooperative Patent Classification (CPC): (Cont.)
**H01M 10/0562; H01M 10/0585; H01M 50/474;**
**H01M 50/477;** H01M 50/486; H01M 2300/0091

## Description

BACKGROUND

Technical Field

The present disclosure relates to a method of manufacturing an electrode, an electrode, an electrode manufacturing apparatus, a method of manufacturing an electrochemical element, and an electrochemical element manufacturing apparatus.

Related Art

Compared to conventional lithium-ion secondary batteries, all-solid-state secondary batteries are highly resistant to temperature changes and have low risk of ignition, which makes all-solid-state secondary batteries promising from the viewpoint of security. In addition, all-solid-state secondary batteries charge quickly, so that there are high expectations from the viewpoint of performance. Therefore, demand for all-solid-state secondary batteries is expected to increase, including applications such as in electric vehicles. Further, batteries are expected to be thinner to be used in various types of wearable devices and medical patches, and thus, the requirements for all-solid-state secondary batteries are diversifying.

In an all-solid-state battery including a positive electrode, a negative electrode, and a solid electrolyte layer, a laminated body including the positive electrode, the solid electrolyte layer, and the negative electrode may be pressed under very high pressure with the aim of achieving high density to improve the performance of the all-solid-state battery. During this pressing process, damage such as cracks may occur in the solid electrolyte. As a result, a short circuit may occur between the positive electrode and the negative electrode when the all-solid-state battery is used.

To prevent damage such as cracks in the solid electrolyte in such an all-solid-state battery, a positive electrode for a solid battery has been reported that includes a positive electrode current collector and a positive electrode active material layer containing a positive electrode active material formed on the positive electrode current collector. In the positive electrode for a solid battery, a positive electrode guide is arranged on at least two adjacent sides of an outer peripheral portion of the positive electrode active material layer on a surface where the positive electrode active material layer is provided (for example, see WO 2020-022111).

SUMMARY

An object of the present invention is to provide a method of manufacturing an electrode having a simplified process and excellent productivity, and by which an electrode with suppressed curling of an electrode base can be manufactured.

A method of manufacturing an electrode according to an embodiment of the present invention as a means of solving the above-described problems includes applying a first liquid composition including a polymerizable compound and a first solvent onto an electrode base to form a first liquid composition layer, polymerizing the polymerizable compound to form a resin structure layer, applying a second liquid composition including an active material and a second solvent onto the electrode base to form a second liquid composition layer, and removing the first solvent and the second solvent.

According to embodiments of the present invention, a method of manufacturing an electrode is provided that has a simplified process and excellent productivity, and by which an electrode with suppressed curling of an electrode base can be manufactured.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1A is a cross-sectional view of an electrode according to an embodiment of the present invention;
FIG. 1B is a cross-sectional view of an electrode according to an embodiment of the present invention;
FIG. 2 is a cross-sectional view of an electrode laminate body according to an embodiment of the present invention;
FIG. 3 is a cross-sectional view of an electrochemical element according to an embodiment of the present invention;
FIG. 4 is a top view of an electrode according to an embodiment of the present invention for explaining a manufacturing process of the electrode;
FIG. 5 is a top view of an electrode according to an embodiment of the present invention for explaining a manufacturing

process of the electrode;
FIG. 6 is a top view of an electrode according to an embodiment of the present invention for explaining a manufacturing process of the electrode;
FIG. 7A is a schematic diagram illustrating an electrode manufacturing apparatus according to an embodiment of the present invention;
FIG. 7B is a schematic diagram illustrating an electrode manufacturing apparatus according to an embodiment of the present invention;
FIG. 8 is a schematic diagram illustrating a liquid discharge apparatus as a resin structure layer manufacturing apparatus according to an embodiment of the present invention;
FIG. 9 is a schematic diagram illustrating a liquid discharge apparatus as a resin structure layer manufacturing apparatus according to an embodiment of the present invention;
FIG. 10 is a schematic diagram illustrating a modification of the liquid discharge apparatus illustrated in FIG. 8;
FIG. 11 is a configuration diagram illustrating a printing portion using a drum-shaped intermediate transfer body as a resin structure layer manufacturing apparatus according to an embodiment of the present invention;
FIG. 12 is a configuration diagram illustrating a printing portion using an intermediate transfer body shaped as an endless belt as a resin structure layer manufacturing apparatus according to an embodiment of the present invention;
FIG. 13 is a cross-sectional view of an all-solid-state battery as an electrochemical element according to an embodiment of the present invention; and
FIG. 14 is a schematic diagram illustrating a moving body including an all-solid-state battery as an electrochemical element according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.
Referring now to the drawings, embodiments of the present disclosure are described below. As used herein, the singular forms "a", "an", and "the" are intended to include the plural forms as well, unless the context clearly indicates otherwise.

(Method of Manufacturing Electrode and Electrode Manufacturing Apparatus)

A method of manufacturing an electrode according to the present embodiment includes a first application step of applying a first liquid composition containing a polymerizable compound and a first solvent onto an electrode base to form a first liquid composition layer, a polymerization step of polymerizing the polymerizable compound to form a resin structure layer, a second application step of applying a second liquid composition containing an active material and a second solvent onto the electrode base to form a second liquid composition layer, and a removal step of removing the first solvent and the second solvent.
An electrode manufacturing apparatus according to the present embodiment includes a first storage container storing a first liquid composition containing a polymerizable compound and a first solvent, a second storage container storing a second liquid composition containing an active material and a second solvent, a first application unit that applies the first liquid composition onto an electrode base to form a first liquid composition layer, a polymerization unit that polymerizes the polymerizable compound to form a resin structure layer, a second application unit that applies the second liquid composition onto the electrode base to form a second liquid composition layer, and a removal unit that removes the first solvent and the second solvent.
The method of manufacturing an electrode according to the present embodiment includes the first application step, the polymerization step, the second application step, and the removal step, and further includes other steps, if desired.
The electrode manufacturing apparatus according to the present embodiment includes the first storage container, the second storage container, the first application unit, the polymerization unit, the second application unit, and the removal unit, and further includes other unit, if desired.
The method of manufacturing an electrode according to the present embodiment is a method based on the

discovery by the inventors of the following problems in the conventional art.

That is, in a conventional manufacturing method of an all-solid-state battery using a positive electrode for an all-solid-state battery, to prevent a short circuit between the positive electrode and a negative electrode in an all-solid-state battery, a positive electrode guide is arranged on an outer peripheral portion of a surface of a positive electrode active material layer facing a solid electrolyte layer, and the positive electrode guide and the surface are laminated and pressed. However, very high pressure is applied when manufacturing an all-solid-state battery, and thus, cracks are generated in the positive electrode guide and a pressure load is applied to the electrode, so that there is still the problem that the pressure load causes damage in the electrode and the solid electrolyte layer.

Note that the positive electrode guide is preferably made of a resin, because it is desirable that the positive electrode guide has a certain degree of viscoelasticity to withstand pressing, and in view of productivity and diversity of shapes of the active material layer, it is preferably to apply a liquid composition by using a coater to form a coating film. As one aspect, WO 2020/022111 discloses an insulating material such as an insulating resin and an inorganic oxide, or a laminated sheet as a material for the positive electrode guide. However, there is no disclosure mentioning that the resin structure layer is manufactured from a liquid composition.

In recent years, to apply small amounts of materials and form precise patterns, techniques for minimizing material loss and applying precise patterns from CAD data and the like without using a plate (mask) have been developed, and inkjet methods are attracting attention as industrial coating methods. Further, by inkjet printing, it is possible to obtain a highly uniform film thickness, highly accurate landing of ink, and separate coating, and it is possible to draw wirings such as an irregularly shaped coating, a fine wiring, and very small pieces. Therefore, inkjet printing is expected to be used in a technique of using a photocurable liquid composition to form an active material layer guide made of resin.

Generally, a photocurable liquid composition often includes a photoinitiator and an acrylic polyfunctional monomer. If such a polyfunctional monomer is used in the photocuring, a large number of monomers polymerize to form one molecule. Thus, volume contraction (hereinafter referred to as "curing shrinkage") occurs due to the gap between the van der Waals distance and the covalent bond distance. This leads to problems by which phenomena such as curling and peeling from the substrate often occur.

When forming, as an active material layer guide, a resin structure layer obtained by applying and curing a liquid composition, the active material layer is thicker than the electrode base (current collector foil) serving as the base material from the viewpoint of energy density of the battery, and thus, the thickness of the resin structure layer also inevitably increases. Therefore, the influence of the curing shrinkage of the resin structure layer is large, and the curling of the electrode base appears particularly noticeable. Accordingly, handling during a pressurization step and a lamination step becomes difficult, and this may cause failures and short circuits during lamination due to cracks occurring in the guide during the pressurization step and peeling of the active material and the resin structure layer. This results in problems such as a poor yield and a decrease in productivity.

As a result of extensive studies with the aim of solving the above-described problem, the inventors of the present invention have found that, by the method of manufacturing an electrode according to the present embodiment, it is possible to simplify the process, obtain excellent productivity, and manufacture an electrode with suppressed curling of the electrode base, which lead to the present invention.

<First Storage Container>

The first storage container includes a container and a first liquid composition containing a polymerizable compound and a first solvent. The container stores the first liquid composition.

Examples of the container include a glass bottle, a plastic container, a plastic bottle, a stainless steel bottle, a drum having a volume of 18 liters, and a steel drum.

<Second Storage Container>

The second storage container includes a container and a second liquid composition containing an active material and a second solvent. The container stores the second liquid composition.

Examples of the container include a glass bottle, a plastic container, a plastic bottle, a stainless steel bottle, a drum having a volume of 18 liters, and a steel drum.

<First Application Step, First Application Unit>

The first application step is a step of applying the first liquid composition containing the polymerizable compound and the first solvent onto the electrode base to form a first liquid composition layer. The first application step can be suitably implemented by the first application unit.

The first application unit is a unit that applies the first liquid composition onto the electrode base to form a first

liquid composition layer.

The first liquid composition contains the polymerizable compound and the first solvent, and further contains other components such as a bonding agent and a conductive material, if desired. Aspects of the first liquid composition will be described later.

The resin structure layer formed from the first liquid composition has pores of 0.01 μm or more and 10 μm or less, and the first solvent preferably has a viscosity of 1 mPa s or more and 150 mPa s or less at 25°C.

Further, it is preferable that the first solvent and the second solvent are different from each other.

The application step and the application unit are not particularly limited and can be appropriately selected according to a purpose, as long as the liquid composition can be applied by the application step and the application unit. Any printing apparatus can be used in accordance with various types of printing methods such as a spin coating method, a casting method, a microgravure coating method, a gravure coating method, a bar coating method, a roll coating method, a wire bar coating method, a dip coating method, a slit coating method, a capillary coating method, a spray coating method, a nozzle coating method, a gravure printing method, a screen printing method, a flexographic printing method, an offset printing method, a reverse printing method, and an inkjet printing method. Among these methods, the inkjet printing method is preferred. Thus, it is possible to form a resin layer with high precision at a desired location.

<Polymerization Step, Polymerization Unit>

The polymerization step is a step of polymerizing the polymerizable compound to form a resin structure layer, and can be suitably implemented by the polymerization unit.

The polymerization unit is a unit that polymerizes the polymerizable compound to form a resin structure layer.

By the polymerization, the polymerizable compound in the liquid composition is polymerized, a porous resin is formed by polymerization-induced phase separation, and a resin structure layer can be formed on the electrode base.

The polymerization step and the polymerization unit are not particularly limited and can be appropriately selected according to a purpose, as long as the polymerization step and the polymerization unit can provide the energy used for promoting the polymerization reaction of the polymerizable compound. Examples of the polymerization step and the polymerization unit include, but are not limited to, irradiation with light such as ultraviolet rays, an electron beam, α-rays, β-rays, γ-rays, X-rays, and infrared rays; and heating. Among these, irradiation with light is preferred, and irradiation with ultraviolet rays is more preferred. Thus, the first liquid composition layer can be polymerized to form a co-continuous structure (a resin backbone) of a porous insulating layer without removing the first solvent in the first liquid composition. That is, the resin structure layer obtained by the polymerization step is a layer containing the first solvent in the resin backbone.

Note that, particularly when using a light source having high energy, the polymerization reaction can proceed without using a polymerization initiator.

The irradiation intensity of the active energy rays is preferably 1 $W/cm^2$ or less, more preferably 300 $mW/cm^2$ or less, and even more preferably 100 $mW/cm^2$ or less. However, if the irradiation intensity of the active energy rays is too low, the phase separation proceeds excessively, and thus, the porous structure is likely to be uneven and coarse. Further, the irradiation time increases and the productivity decreases. Therefore, the irradiation intensity is preferably 10 $mW/cm^2$ or more, and more preferably 30 $mW/cm^2$ or more.

<Second Application Step, Second Application Unit>

The second application step is a step of applying the second liquid composition containing the active material and the second solvent onto the electrode base to form a second liquid composition layer. The second application step can be suitably implemented by the second application unit.

The second application unit is a unit that applies the second liquid composition onto the electrode base to form a second liquid composition layer.

The second liquid composition contains the active material and the second solvent, and further contains other components such as a bonding agent and a conductive material, if desired.

- Second Liquid Composition -

The second liquid composition is a composition used for forming an electrode composite layer (may be referred to as an "active material layer"), and contains an active material and a dispersion medium, and if desired, further contains other components such as dispersants, conductive auxiliary agents, binders, non-aqueous electrolytes, solid electrolytes, gel electrolytes, and monomers that form gel electrolytes via a polymerization process.

A negative electrode composite layer and a positive electrode composite layer are collectively referred to as "electrode composite layer", and a negative electrode active material and a positive electrode active material are collectively referred to as "active material".

-- Active Material --

As the active material, a positive electrode active material or a negative electrode active material can be used. One type of positive electrode active material or negative electrode active material may be used alone, or two or more types may be used in combination.

The positive electrode active material is not particularly limited, as long as the positive electrode active material is a material that can reversibly intercalate and release alkali metal ions, and a transition metal compound containing an alkali metal can be used as the positive electrode active material.

Examples of the transition metal compound containing an alkali metal include, but are not limited to, transition metal compounds containing lithium, such as composite oxides containing lithium and one or more elements selected from the group including cobalt, manganese, nickel, chromium, iron, and vanadium.

Examples of the transition metal compounds containing lithium include, but are not limited to, lithium cobaltate, lithium nickelate, and lithium manganate.

Polyanionic compounds having an XO4 tetrahedron (X = P, S, As, Mo, W, Si, and the like) in the crystal structure can also be used as the transition metal compound containing an alkali metal. Among these, transition metal phosphate compounds containing lithium such as lithium iron phosphate and lithium vanadium phosphate are preferred from the viewpoint of cycle characteristics, and lithium vanadium phosphate is particularly preferred from the viewpoint of the lithium diffusion coefficient and output characteristics.

From the viewpoint of electron conductivity, it is preferable that the surface of the polyanionic compound is coated with a conductive auxiliary agent such as a carbon material to form a composite compound.

Examples of transition metal compounds containing sodium include, but are not limited to, $NaMO_2$-type oxides, sodium chromite ($NaCrO_2$), sodium ferrate ($NaFeO_2$), sodium nickelate ($NaNiO_2$), sodium cobaltate ($NaCoO_2$), sodium manganate ($NaMnO_2$), and sodium vanadate ($NaVO_2$). A part of the element M may be substituted with a metal element other than M and Na, for example, with at least one type of metal element selected from the group including Cr, Ni, Fe, Co, Mn, V, Ti, and Al.

Further, $Na_2FePO_4F$, $NaVPO_4F$, $NaCoPO_4$, $NaNiPO_4$, $NaMnPO_4$, $NaMn_{1.5}Ni_{0.5}O_4$, $Na_2V_2(PO_4)_3$, and the like can also be used as the transition metal compounds containing sodium.

As the negative electrode active material, a material that can intercalate and release metals that form an alloy with alkali metal ions such as Li ions or Na ions can be used. Examples of such materials include, but are not limited to, inorganic compounds such as composite oxides of transition metals and Li, metal oxides, alloy materials, and transition metal sulfides, carbon materials, organic compounds, Li metals, and Na metals.

Examples of the composite oxides include, but are not limited to, $LiMnO_2$, $LiMn_2O_4$, lithium titanates ($Li_4Ti_5O_{12}$, $Li_2Ti_3O_7$), lithium manganese titanate ($LiMg_{1/2}Ti_{3/2}O_4$), lithium cobalt titanate ($LiCo_{1/2}Ti_{3/2}O_4$), lithium zinc titanate ($LiZn_{1/2}Ti_{3/2}O_4$), lithium iron titanate ($LiFeTiO_4$), lithium chromium titanate ($LiCrTiO_4$), lithium strontium titanate ($Li_2SrTi_6O_{14}$), and lithium barium titanate ($Li_2BaTi_6O_{14}$).

Examples of sodium composite oxides include, but are not limited to, sodium titanates, such as $Na_2Ti_3O_7$ and $Na_4Ti_5O_{12}$. A part of the Ti or Na atoms in the sodium titanates may be replaced with another element. Examples of such elements include, but are not limited to, at least one type of element selected from the group including Ni, Co, Mn, Fe, Al, and Cr.

Examples of the metal oxides include, but are not limited to, $TiO_2$, $Nb_2TiO_7$, $WO_3$, $MoO_2$, $MnO_2$, $V_2O_5$, $SiO_2$, SiO, and $SnO_2$.

Examples of the alloy materials include, but are not limited to, Al, Si, Sn, Ge, Pb, As, and Sb.

Examples of the transition metal sulfides include, but are not limited to, FeS and TiS. Examples of the carbon materials include, but are not limited to, graphite, non-graphitizable carbon, and easily graphitizable carbon. As an inorganic compound, a compound in which the transition metal of the composite oxides mentioned above is replaced with a different element may be used.

-- Second Solvent (Dispersion Medium) --

The second solvent (dispersion medium) is not particularly limited and can be appropriately selected according to a purpose, as long as the second solvent can disperse the active material. Examples of the second solvent include, but are not limited to, aqueous dispersion media such as water, ethylene glycol, and propylene glycol; and organic dispersion media such as N-methyl-2-pyrrolidone, 2-pyrrolidone, cyclohexanone, ethyl lactate, butyl acetate, mesitylene, ethylene glycol monoethyl ether, ethylene glycol monobutyl ether, ethylene glycol monoethyl ether acetate, diethylene glycol monoethyl ether, diethylene glycol monobutyl ether, propylene glycol monomethyl ether, propylene glycol monoethyl ether, propylene glycol monobutyl ether, dibutyl ether, diethyl ether, di-tert-butyl ether, 2-n-butoxymethanol, 2-dimethylethanol, N,N-dimethylacetamide, anisole, diethoxyethane, normal hexane, heptane, octane, nonane, decane, and p-menthane. These solvents may be used alone or in combination of two or more types.

The boiling point of the second solvent is not particularly limited and can be appropriately selected according to a purpose, but is preferably 70°C or higher from the viewpoint of storage stability. For example, when the boiling point is 70°C or higher and the second solvent is stored at room temperature, it is possible to suppress precipitation caused by a concentration effect as the solvent volatilizes, and thus, excellent storage stability is obtained. Further, the boiling point of the second solvent is preferably 210°C or lower from the viewpoint of the battery characteristics.

The content of the second solvent is preferably 10 mass% or more with respect to the total amount of the second liquid composition. If the content of the second solvent is 10 mass% or more, it is possible to suppress the occurrence of irregularities caused during film formation and form a highly uniform liquid layer of the second liquid composition. The content of the second solvent is preferably 80 mass% or less with respect to the total amount of the second liquid composition. If the content of the second solvent is 80 mass% or less, a liquid composition is obtained that has a viscosity at which a highly uniform liquid layer can be easily formed.

-- Other Components --

--- Conductive Auxiliary Agent ---

The conductive auxiliary agent may be formed as a composite material with the active material in advance, or may be added when preparing a dispersion liquid.

Examples of the conductive auxiliary agent include, but are not limited to, conductive carbon black formed by a furnace method, an acetylene method, or a gasification method, and carbon materials such as carbon nanofibers, carbon nanotubes, graphene, and graphite particles.

As a conductive auxiliary agent other than the carbon materials, metal particles such as aluminum or metal fibers can be used, for example.

The mass ratio of the conductive auxiliary agent to the active material is preferably 10 mass% or less, and more preferably 8 mass% or less. When the mass ratio of the conductive auxiliary agent to the active material is 10 mass% or less, the stability of the dispersion liquid improves.

--- Dispersant ---

The dispersant is not particularly limited, as long as the dispersant can improve the dispersibility of the active material, polymer particles, and the conductive auxiliary agent in the dispersion medium. Examples of the dispersant include, but are not limited to, polymer-type dispersants based on polycarboxylic acid, naphthalene sulfonic acid formalin condensates, polyethylene glycol, partial alkyl esters of polycarboxylic acid, polyethers, and polyalkylene polyamine; surfactant-type dispersants based on alkyl sulfonic acid, quaternary ammonium, higher alcohol alkylene oxides, polyhydric alcohol esters, and alkyl polyamines; and inorganic-type dispersants based on polyphosphate.

--- Binder ---

The binder is added to ensure binding strength when the dispersant or the electrolyte material is not sufficient to bind positive electrode materials or negative electrode materials together, or to bind the positive electrode material or the negative electrode material to the electrode base. The binder is not particularly limited as long as the binder can impart binding strength, but from the viewpoint of inkjet discharge properties, the binder is preferably a compound that does not increase the viscosity. The binder may be provided by a method of adding a monomer compound and then polymerizing the monomer compound, or a method of using polymer particles. Further, a polymer compound or the like that can be dispersed in the dispersion medium can be used as the material that does not increase the viscosity of the liquid composition.

When using a polymer compound that can be dissolved in a dispersion medium, it is sufficient that the liquid composition in which the polymer compound is dissolved in the dispersion medium has a viscosity at which the liquid composition can be discharged from a liquid discharge head.

Examples of methods of using a monomer compound include, but are not limited to, a method of applying a dispersion liquid in which a compound having a polymerizable site and a polymerization initiator or a catalyst are dissolved, and then heating the obtained product; and irradiation with non-ionizing radiation, ionizing radiation, or infrared rays.

In a compound having a polymerizable site, the molecule may include one polymerization site, or the molecule may be polyfunctional. The term "polyfunctional polymerizable compound" refers to a compound having two or more polymerizable groups. The polyfunctional polymerizable compound is not particularly limited as long as the polyfunctional polymerizable compound can be polymerized by heating or irradiation with non-ionizing radiation, ionizing radiation, or

infrared rays.

Examples of polyfunctional polymerizable compounds include, but are not limited to, acrylate resins, methacrylate resins, urethane acrylate resins, vinyl ester resins, unsaturated polyesters, epoxy resins, oxetane resins, vinyl ethers, and resins in which an ene-thiol reaction is utilized. Among these resins, acrylate resins, methacrylate resins, urethane acrylate resins, or vinyl ester resins are preferred from the viewpoint of productivity.

Examples of materials forming the polymer particles include, but are not limited to, polyvinylidene fluoride, acrylic resins, polyamide compounds, polyimide compounds, polyamide-imides, ethylene-propylene-butadiene rubber (EPBR), styrene-butadiene copolymer, nitrile butadiene rubber (HNBR), isoprene rubber, polyisobutene, polyethylene glycol (PEO), polymethyl methacrylic acid (PMMA), polyethylene vinyl acetate (PEVA), polyethylene, polypropylene, polyurethane, nylon, polytetrafluoroethylene, polyphenylene sulfide, polyethylene terephthalate, and polybutylene terephthalate.

Examples of polymer compounds include, but are not limited to, polyamide compounds, polyimide compounds, polyamide-imides, ethylene-propylene-butadiene rubber (EPBR), styrene-butadiene rubber (SBR), nitrile butadiene rubber (NBR), isoprene rubber, polyisobutene, polyethylene glycol (PEO), polymethyl methacrylic acid (PMMA), and polyethylene vinyl acetate (PEVA).

The mass ratio of the binder to the active material is preferably 10% or less, and more preferably 5% or less. When the mass ratio of the binder to the active material is 10% or less, the binding strength during electrode formation is improved without impairing the discharge performance.

A method of forming the second liquid composition layer is not particularly limited and can be appropriately selected according to a purpose. Examples of the method include, but are not limited to, a method of dispersing a powdered active material, a bonding agent, and a conductive material in a liquid, applying and fixing the obtained second liquid composition layer to an electrode base, and drying the obtained electrode base.

Examples of the method of applying the second liquid composition layer include, but are not limited to, methods using a spray, a dispenser, a die coater, and dip coating.

<Removal Step, Removal Unit>

The removal step is a step of removing the first solvent and the second solvent, and can be suitably implemented by the removal unit.

The removal unit is a unit that removes the first solvent and the second solvent.

The method of removing the first solvent and the second solvent is not particularly limited. Examples thereof include, but are not limited to, a method of removing liquids such as solvents and dispersion liquids from the first liquid composition layer and the second liquid composition layer by heating. At this time, heating under reduced pressure is preferable, because this further promotes the removal of the solvent and can suppress residual liquid in the resin structure layer being formed.

In the heating, a stage may be used to heat the first liquid composition layer and the second liquid composition layer or a heating mechanism other than the stage may be used. The heating mechanism may be arranged above or below the base, or a plurality of heating mechanisms may be provided. The heating mechanism is not particularly limited, and examples thereof include, but are not limited to, resistance heaters, infrared heaters, and fan heaters.

The heating temperature is not particularly limited, but from the viewpoint of energy usage, the heating temperature is preferably from 70°C to 150°C.

<Other Steps, Other Unit>

Other steps in the method of manufacturing an electrode are not are not particularly limited and can be appropriately selected according to a purpose, as long as the effect of the present embodiment is not impaired.

Other unit in the electrode manufacturing apparatus are not particularly limited and can be appropriately selected according to a purpose, as long as the effect of the present embodiment is not impaired.

In one aspect, the method of manufacturing an electrode includes the first application step, the polymerization step, and the second application step in this order, and it is preferable that the second application step is a step of applying the second liquid composition to a location adjacent to the resin structure layer on the electrode base.

Thus, an electrode composite layer is formed inside a frame formed from an insulating resin layer by using a wet-on-wet process, so that an interface between the electrode composite layer and the insulating resin layer has a cross-sectional shape in which the electrode composite layer rises over an upper portion of the insulating resin layer (see FIG. 1B). Therefore, the area of a surface of the electrode composite layer not contacting the electrode base is equal to or larger than the area of a surface of the electrode composite layer contacting the electrode base, and contacts and continues from the electrode composite layer and the insulating resin layer.

Note that the height of the electrode composite layer and the height of the insulating resin layer may be substantially the same or may not be substantially the same. By performing a pressing step, it is possible to make the height of the electrode composite layer and the height of the insulating resin layer substantially the same.

In another aspect, the polymerization step is implemented after the first application step and the second application step are implemented simultaneously or sequentially, and it is preferable that the first liquid composition and the second liquid composition are applied to locations adjacent to each other.

Thus, unnecessary wet spreading of the first liquid composition and the second liquid composition can be prevented, and a desired interface can be formed between the resin structure layer and the electrode composite layer. Specifically, when the second liquid composition is applied to form the second liquid composition layer and the second liquid composition layer is dried to form the electrode composite layer before forming the resin structure layer, variations may occur at an end portion of the obtained electrode composite layer due to wet spreading. However, according to the present aspect, it is possible to effectively prevent the occurrence of variations in the end portion of the electrode composite layer. Accordingly, the electrode composite layer contacts and continues from an end surface of the resin structure layer, and covers an end portion of the resin structure layer that contacts the electrode base. Thus, it is possible to obtain good adhesion.

Note that the height of the electrode composite layer and the height of the insulating resin layer may be substantially the same or may not be substantially the same. By performing a pressing step, it is possible to make the height of the electrode composite layer and the height of the insulating resin layer substantially the same.

- First Liquid Composition -

The first liquid composition (sometimes referred to as "liquid composition") is a liquid composition for forming a resin structure layer, and includes a polymerizable compound and a first solvent, and further includes other components such as a polymerization initiator, if desired.

The first liquid composition is not particularly limited and can be appropriately selected according to a purpose. However, suitable examples of the first liquid composition include liquid compositions of a first embodiment, a second embodiment, and a third embodiment described below.

[First Embodiment]

In the first embodiment, the first liquid composition includes a polymerizable compound represented by General Formula (1) below and a non-aqueous solvent represented by General Formula (2) below as a first solvent, and if desired, further includes other components such as a polymerization initiator.

When A in General Formula (2) is a hydroxyl group, the difference in Millikan charge between the hydrogen atom and the oxygen atom in the hydroxyl group is 0.520 or more, and when A in General Formula (2) is an amino group, the difference in Millikan charge between the hydrogen atom and the nitrogen atom in the amino group is 0.470 or more.

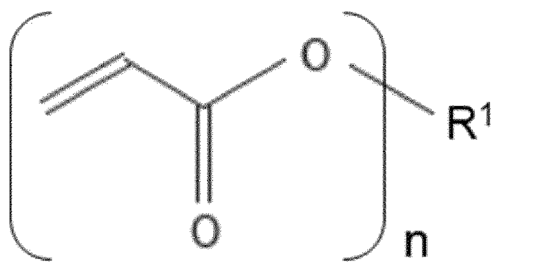

(1)

(in General Formula (1), $R^1$ represents an n-valent functional group that has 2 or more carbon atoms and may have an oxygen atom, and n represents an integer of 2 to 6)

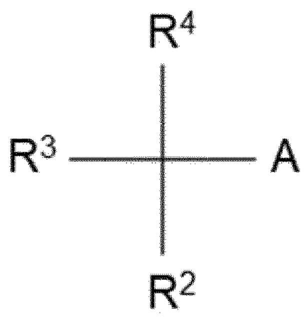

(2)

(in General Formula (2), $R^2$, $R^3$, and $R^4$ each independently represent a hydrocarbon group, the total number of carbon atoms in $R^2$, $R^3$, and $R^4$ is 4 or more, and A represents a hydroxyl group or an amino group represented by $-NR^5H$, where $R^5$ represents a hydrogen atom, a methyl group, or an ethyl group)

The first liquid composition according to the first embodiment can suppress a decrease in the ionic conductivity of the sulfide solid electrolyte, and can form a resin structure layer having little warpage.

The polymerizable compound is not particularly limited and can be appropriately selected according to a purpose. Examples of the polymerizable compound include, but are not limited to, bifunctional acrylates such as bifunctional alkyl acrylates, hydroxypivalic acid neopentyl glycol acrylate adducts, bifunctional polyethylene glycol acrylates, bifunctional polypropylene glycol acrylates, bifunctional polytetramethylene glycol acrylates, bifunctional cyclic acrylates, bifunctional alkoxylated aromatic acrylates, and bifunctional acrylic acid multimer ester acrylates; trifunctional acrylates such as trifunctional trimethylolpropane acrylates, trifunctional alkoxylated glycerin acrylates, and trifunctional isocyanunate acrylates; and tetrafunctional to hexafunctional acrylates such as tetrafunctional pentaerythol acrylates, tetrafunctional ditrimethylolpropane acrylates, tetrafunctional diglycerin tetraacrylates, and hexafunctional dipentaerythol hexaacrylates.

These compounds may be used alone or in combination of two or more types.

[Second Embodiment]

In the second embodiment, the first liquid composition includes a polymerizable compound represented by General Formula (3) below and having an average molecular weight of less than 700, and a solvent that is a non-aromatic compound as a first solvent, and if desired, includes other components such as a polymerization initiator.

$\Delta HSP^2$ is expressed by Equation (I) below, where ($\delta_D{}^A$, $\delta_P{}^A$, $\delta_H{}^A$) is the Hansen solubility parameter (HSP) of the polymerizable compound, $X^A$ is the volume fraction of the polymerizable compound, ($\delta_D{}^B$, $\delta_P{}^B$, $\delta_H{}^B$) is the HSP of the solvent, $X^B$ is the volume fraction of the solvent, ($\delta_D{}^C$, $\delta_P{}^C$, $\delta_H{}^C$) is the HSP of the liquid composition, and $X^A + X^B = 1$ is the volume fraction of the liquid composition. $\Delta HSP^2_{SL}$ is the $\Delta HSP^2$ at the limit of compatibility between the polymerizable compound and the solvent. The relationship between $\Delta HSP^2$ and $\Delta HSP^2_{SL}$ satisfies Expression (II) below.

Equation (I)

$$\Delta HSP^2 = (\delta_D{}^A - \delta_D{}^C)^2 + (\delta_P{}^A - \delta_P{}^C)^2 + (\delta_H{}^A - \delta_H{}^C)^2$$

Expression (II)

$$0.51 \leq \Delta HSP^2 \leq \Delta HSP^2_{SL}$$

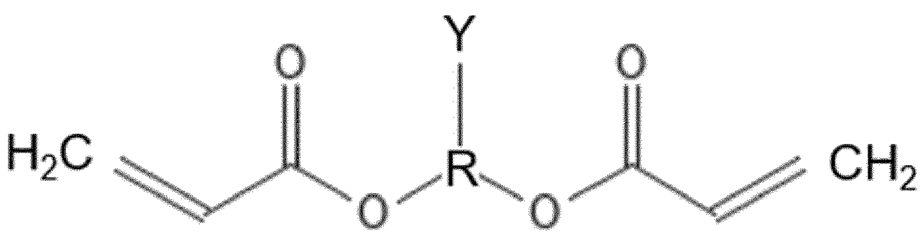

(3)

(in General Formula (3) above, R represents at least one of an acyclic alkylene group and an acyclic alkylene oxide group, and Y represents a hydrogen atom or a $-O-COCH=CH_2$ group)

The first liquid composition according to the second embodiment can simultaneously reduce curing shrinkage and swelling shrinkage when the resin layer is formed, and form a resin layer in which warpage is suppressed, even in a resin layer having a thickness at a scale of 100 μm.

When the above-mentioned Y is a hydrogen atom, the polymerizable compound is a bifunctional acrylate. When Y is a $-O-COCH=CH_2$ group (that is, a group in which an oxygen atom is bonded to an acrylic group), the polymerizable compound is a trifunctional acrylate.

Examples of the bifunctional acrylate include, but are not limited to, bifunctional acyclic alkyl acrylates; and bifunctional acyclic polyalkylene oxide acrylates such as bifunctional acyclic polyethylene glycol acrylates, bifunctional acyclic polypropylene glycol acrylates, and bifunctional acyclic polytetramethylene glycol acrylates.

Examples of the trifunctional acrylate include, but are not limited to, trifunctional acyclic alkyl acrylates and trifunctional acyclic polyalkylene oxide acrylates.

These acrylates may be used alone or in combination of two or more types.

The solvent is not particularly limited and can be appropriately selected according to a purpose, as long as the solvent is a non-aromatic compound. Examples of the solvent include, but are not limited to, alcohol-based solvents, amine-based solvents, hydrocarbon-based solvents, ester-based solvents, ketone-based solvents, aldehyde-based solvents, aldehyde-based solvents, and thiol-based solvents.

These solvents may be used alone or in combination of two or more types.

[Third Embodiment]

In the third embodiment, the first liquid composition includes a polymerizable compound and a liquid as the first solvent, and if desired, further includes other components such as a polymerization initiator.

The liquid composition forms a porous resin and has a light transmittance of 30% or more at a wavelength of 550 nm measured while stirring the liquid composition. An increase rate in haze value of a haze measurement element prepared by polymerizing the liquid composition is 1.0% or more.

As the polymerizable compound according to the third embodiment, an item described in Japanese Unexamined Patent Application Publication No. 2021-088691 can be appropriately selected.

Below, items common to the first to third embodiments and items relating to each individual embodiment (mainly the third embodiment) will be described.

The liquid composition forms a porous structure body. That is, a resin structure body (also referred to as a "porous resin" or a "porous structure body") is formed that has a porous structure in which a resin obtained by polymerizing and curing the polymerizable compound in the liquid composition forms a backbone.

Here, the expression "the liquid composition forms a porous resin" refers not only to a case where a porous resin is formed in a liquid composition, but also to a case where a precursor of a porous resin (for example, a backbone part of a porous resin) is formed in a liquid composition, and in a subsequent process (for example, a heating process and the like), a porous resin is formed.

-- Polymerizable Compound --

The polymerizable compound polymerizes to form a resin, and forms a porous resin depending on the composition and the characteristics of the liquid composition.

The polymerizable compound is not particularly limited can be appropriately selected from known polymerizable compounds according to a purpose, as long as the polymerizable compound polymerizes to form a polymer (a resin). However, the polymerizable compound preferably has at least one radical-polymerizable functional group.

Suitable examples of the polymerizable compound include, but are not limited to, radical-polymerizable compounds such as monofunctional, bifunctional, and trifunctional or higher functional radical-polymerizable monomers and radical-polymerizable oligomers; functional monomers that further have a functional group other than the polymerizable functional group, and functional oligomers. Among these compounds, bifunctional or higher functional radical-polymerizable compounds are preferred.

The polymerizable group of the polymerizable compound is preferably at least one of a (meth)acryloyl group and a vinyl group, and more preferably a (meth)acryloyl group.

The polymerizable compound is preferably polymerizable by irradiation with active energy rays, and more preferably polymerizable by heat or light.

The resin formed from the polymerizable compound is preferably a resin including a network structure body formed by application of active energy rays (for example, irradiation with light, application of heat, and the like). Suitable

examples of the resin include, but are not limited to, acrylate resins, methacrylate resins, urethane acrylate resins, vinyl ester resins, unsaturated polyester resins, epoxy resins, oxetane resins, vinyl ether resins, and resins formed by an ene-thiol reaction.

Among these resins, acrylate resins, methacrylate resins, and urethane acrylate resins, which are resins formed from a polymerizable compound having a (meth)acryloyl group, are more preferred because in this case, a structure body can be easily formed by utilizing radical polymerization having high reactivity. Further, from the viewpoint of productivity, vinyl ester resins, which are resins formed from a polymerizable compound having a vinyl group, are more preferred.

These resins may be used alone or in combination of two or more types. If two or more resins are used in combination, the combination of the polymerizable compounds is not particularly limited and can be appropriately selected according to a purpose. Preferred examples thereof include combinations of urethane acrylate resins as main components with other resins, for the purpose of imparting flexibility. Note that a polymerizable compound having at least any one of an acryloyl group and a methacryloyl group is referred to as a polymerizable compound having a (meth)acryloyl group.

The active energy rays are not particularly limited and can be appropriately selected according to a purpose, as long as the active energy rays can provide the energy used for promoting the polymerization reaction of the polymerizable compound in the liquid composition. Examples of the active energy rays include, but are not limited to, ultraviolet rays, an electron beam, $\alpha$-rays, $\beta$-rays, $\gamma$-rays, and X-rays. Among these active energy rays, ultraviolet rays are preferred. Particularly when using a light source having high energy, the polymerization reaction can proceed without using a polymerization initiator.

The irradiation intensity of the active energy rays is preferably 1 $W/cm^2$ or less, more preferably 300 $mW/cm^2$ or less, and even more preferably 100 $mW/cm^2$ or less. However, if the irradiation intensity of the active energy rays is too low, the phase separation proceeds excessively, and thus, the porous structure is likely to be uneven and coarse. Further, the irradiation time increases and the productivity decreases. Therefore, the irradiation intensity is preferably 10 $mW/cm^2$ or more, and more preferably 30 $mW/cm^2$ or more.

Examples of the monofunctional radical-polymerizable compounds include, but are not limited to, 2-(2-ethoxyethoxy)ethyl acrylate, methoxypolyethylene glycol monoacrylate, methoxypolyethylene glycol monomethacrylate, phenoxy polyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexylcarbitol acrylate, 3-methoxybutyl acrylate, benzyl acrylate, cyclohexyl acrylate, isoamyl acrylate, isobutyl acrylate, methoxytriethylene glycol acrylate, phenoxy tetraethylene glycol acrylate, cetyl acrylate, isostearyl acrylate, stearyl acrylate, and styrene monomers. These compounds may be used alone or in combination of two or more types.

Examples of the bifunctional radical-polymerizable compounds include, but are not limited to, 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, neopentyl glycol diacrylate, and tricyclodecane dimethanol diacrylate. These compounds may be used alone or in combination of two or more types.

Examples of the trifunctional or higher functional radical-polymerizable compounds include, but are not limited to, trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl) isocyanurate, dipentaerythritol hexaacrylate (DPHA), caprolactone-modified dipentaerythritol hexaacrylate, dipentaerythritol hydroxypentaacrylate, alkyl-modified dipentaerythritol pentaacrylate, alkyl-modified dipentaerythritol tetraacrylate, alkyl-modified dipentaerythritol triacrylate, dimethylolpropane tetraacrylate (DTMPTA), pentaerythritol ethoxytetraacrylate, EO-modified phosphate triacrylate, and 2,2,5,5-tetrahydroxymethyl cyclopentanone tetraacrylate. These compounds may be used alone or in combination of two or more types.

The content of the polymerizable compound is preferably 5.0 mass% or more and 70.0 mass% or less, more preferably 10.0 mass% or more and 50.0 mass% or less, and even more preferably 20.0 mass% or more and 40.0 mass% or less, with respect to the total amount of the liquid composition.

The content of the polymerizable compound is preferably 70.0 mass% or less, because in this case, the pore size of the obtained porous body is several nanometers or less, which is not too small and gives the porous body an appropriate porosity, which prevents a decrease in permeation of liquids and gases. The content of the polymerizable compound is preferably 5.0 mass% or more, because in this case, a three-dimensional network structure of the resin is sufficiently formed to sufficiently obtain the porous structure, and the strength of the obtained porous structure is also improved.

-- Liquid --

The liquid contains a porogen and further contains another liquid other than the porogen, if desired.

The porogen is a liquid that is compatible with the polymerizable compound and becomes incompatible (causes phase separation) with the polymer (resin) during the process in which the polymerizable compound polymerizes in the liquid composition. If the liquid composition includes the porogen, a porous resin is formed when the polymerizable compound is polymerized. Further, it is preferable that the liquid composition can dissolve a compound (a polymerization initiator described below) that generates radicals or acids by light or heat.

The liquid or the porogen may be used alone or in combination of two or more types.

In the present embodiment, the liquid is not polymerizable.

The boiling point when one type of porogen is used alone or when two or more types of porogen are used in combination is preferably 50°C or higher and 250°C or lower, more preferably 70°C or higher and 200°C or lower, and even more preferably 120°C or higher and 190°C or lower, at normal pressure. When the boiling point is 50°C or higher, vaporization of the porogen at or around room temperature is suppressed, and thus, it easier to handle the liquid composition and to control the content of the porogen in the liquid composition. When the boiling point is 250°C or lower, the time used in a step of removing the porogen after polymerization is shortened, and the productivity for the porous resin is improved. Further, the amount of porogen remaining inside the porous resin can be reduced, so that the quality of the porous resin as a functional layer, such as a substance separation layer for separating substances and a reaction layer used as a reaction field, is improved.

Examples of the porogen include, but are not limited to, ethylene glycols such as diethylene glycol monomethyl ether, ethylene glycol monobutyl ether, ethylene glycol monoisopropyl ether, and dipropylene glycol monomethyl ether; esters such as γ-butyrolactone and propylene carbonate; and amides such as N,N-dimethylacetamide. Further examples of the porogen include, but are not limited to, liquids having relatively high molecular weight such as methyl tetradecanoate, methyl decanoate, methyl myristate, and tetradecane. Moreover, examples of the porogen also include, but are not limited to, liquids such as acetone, 2-ethylhexanol, and 1-bromonaphthalene.

Note that not all of the liquids mentioned above correspond to porogen.

As described above, the porogen is a liquid that is compatible with the polymerizable compound and becomes incompatible (causes phase separation) with the polymer (resin) generated during the process in which the polymerizable compound polymerizes in the liquid composition. In other words, whether a certain liquid corresponds to a porogen is determined by the relationship between the polymerizable compound and the polymer (the resin formed by polymerization of the polymerizable compound).

The liquid composition may be any liquid composition containing at least one type of porogen having the above-described specific relationship with the polymerizable compound. Therefore, the range for selecting materials for preparing the liquid composition is widened, and the liquid composition can be easily designed. As the range for selecting materials for preparing the liquid composition is widened, the range of applications widens in a case where it is desired that the liquid composition has additional characteristics other than the capability of forming a porous structure.

For example, when the liquid composition is to be discharged by an inkjet method, it is desired that the liquid composition has discharge stability as an additional characteristic other than the capability of forming a porous structure. Therefore, the range for selecting materials is widened, and the liquid composition can be easily designed.

The content of the liquid or the porogen is preferably 30.0 mass% or more and 95.0 mass% or less, more preferably 50.0 mass% or more and 90.0 mass% or less, and even more preferably 60.0 mass% or more and 80.0 mass% or less, with respect to the total amount of the liquid composition.

The content of the liquid or the porogen is preferably 30.0 mass% or more, because in this case, the pore size of the obtained porous body is several nanometers or less, which is not too small and gives the porous body an appropriate porosity, which prevents a decrease in permeation of liquids and gases. The content of the liquid or the porogen is preferably 95.0 mass% or less, because in this case, a three-dimensional network structure of the resin is sufficiently formed to sufficiently obtain the porous structure, and the strength of the obtained porous structure is also improved.

As mentioned above, the liquid composition may be any liquid composition containing at least one type of porogen having the above-described specific relationship with the polymerizable compound. Thus, the liquid composition may additionally contain another liquid (a liquid that is not a porogen) that does not have the above-described specific relationship with the polymerizable compound.

The content of the other liquid is preferably 10.0 mass% or less, more preferably 5.0 mass% or less, and even more preferably 1.0 mass% or less, with respect to the total amount of the liquid composition, and particularly preferably 0 mass% (the other liquid is not contained).

The mass ratio of the content of the polymerizable compound with respect to the content of the porogen (polymerizable compound: porogen) in the liquid composition is preferably 1.0: 0.4 to 1.0: 19.0, more preferably 1.0: 1.0 to 1.0: 9.0, and even more preferably 1.0: 1.5 to 1.0: 4.0.

[Polymerization-induced Phase Separation]

The porous resin is formed by polymerization-induced phase separation. The polymerization-induced phase separation refers to a state in which the porogen is compatible with the polymerizable compound, but is incompatible (causes phase separation) with the polymer (the resin) generated during the process in which the polymerizable compound polymerizes. Among existing methods of obtaining a porous body by phase separation, the polymerization-induced phase separation method advantageously forms a porous body having a network structure, so that a porous body having high resistance to chemicals and heat is obtained. Additionally, compared to other methods, the polymerization-induced phase separation method also has the advantage of short process time and easy surface modification.

Next, a process of forming a porous resin by polymerization-induced phase separation using a liquid composition containing a polymerizable compound will be described. When being irradiated with light or the like, the polymerizable compound undergoes a polymerization reaction to form a resin. During this process, the solubility of the polymerizable compound with respect to the porogen in the growing resin decreases and phase separation occurs between the resin and the porogen. Finally, the pores of the resin are filled with the porogen or the like, so that a porous structure having a co-continuous structure from the resin backbone is formed. The porous structure is dried to remove the porogen and the like, and a porous resin having a co-continuous structure in a three-dimensional network structure remains. Therefore, to form a porous resin having an appropriate porosity, the compatibility between the porogen and the polymerizable compound and the compatibility between the porogen and the resin formed by polymerization of the polymerizable compound are examined.

[Light Transmittance]

The light transmittance at a wavelength of 550 nm measured while stirring the liquid composition is 30% or more.

The compatibility between the porogen and the polymerizable compound can be determined from the light transmittance.

When the light transmittance is 30% or more, it is determined that the liquid includes the porogen and the polymerizable compound and the porogen are compatible, and when the light transmittance is less than 30%, it is determined that the polymerizable compound and the liquid are incompatible.

Specifically, the light transmittance can be measured by the following method.

First, the liquid composition is injected into a quartz cell, and the transmittance of light (visible light) at a wavelength of 550 nm of the liquid composition is measured under the conditions below, while stirring the liquid composition by using a stirrer at 300 rpm.

- Quartz cell: Special microcell having screw cap (product number: 42016, manufactured by MITORIKA)
- Transmittance measurement device: USB4000, manufactured by Ocean Optics, Inc.
- Stirring speed: 300 rpm
- Measurement wavelength: 550 nm
- Reference: Light transmittance at wavelength of 550 nm measured and acquired in quartz cell filled with air (transmittance: 100%)

[Increase Rate of Haze Value]

The increase rate of the haze value of a haze measurement element prepared by polymerizing the liquid composition is 1.0% or more.

The compatibility between the porogen and the resin formed by polymerization of the polymerizable compound can be determined by the increase rate of the haze value.

When the increase rate of the haze value is 1.0% or more, it is determined that the liquid includes a porogen and the resin and the porogen are incompatible. When the increase rate of the haze value is less than 1.0%, it is determined that the resin and the liquid are compatible.

The haze value of the haze measurement element increases as the compatibility between the porogen and the resin formed by polymerization of the polymerizable compound decreases, and the haze value decreases as the compatibility increases. A higher haze value indicates that the resin formed by the polymerization of the polymerizable compound is more likely to form a porous structure.

Specifically, the increase rate of the haze value is the increase rate of the haze value before and after the polymerization of a haze measurement element prepared by polymerizing the liquid composition and having an average thickness of 100 μm. The increase rate of the haze value can be measured by the following method.

- Preparation of Haze Measurement Element -

First, fine resin particles as a gap agent are uniformly dispersed on an alkali-free glass substrate by spin coating. Subsequently, the substrate coated with the gap agent is bonded to an alkali-free glass substrate not coated with the gap agent, so that a surface coated with the gap agent is sandwiched therebetween. Next, the liquid composition is filled into a space between the bonded substrates by utilizing capillary action, to prepare a "pre-UV irradiation haze measurement element". Subsequently, the pre-UV irradiation haze measurement element is irradiated with UV light to cure the liquid composition. Finally, the periphery of the substrate is sealed with a sealant to produce a "haze measurement element". The size of the gap agent (an average particle diameter of 100 μm) corresponds to the average thickness of the haze measurement element. The conditions during the preparation are described below.

- Alkali-free glass substrate: OA-10G manufactured by Nippon Electric Glass Co., Ltd., 40 mm, t = 0.7 mm
- Gap agent: fine resin particles MICROPEARL GS-L100, average particle diameter 100 μm, manufactured by Sekisui Chemical Co., Ltd.
- Spin coating conditions: dispersion liquid dropping amount 150 μL, rotation speed 1000 rpm, rotation time 30 s
- Amount of liquid composition being filled: 160 μL
- UV irradiation conditions: UV-LED used as light source, wavelength of light source 365 nm, irradiation intensity 30 mW/cm$^2$, irradiation time 20 s
- Sealant: TB3035B (manufactured by Three Bond Co., Ltd.)
- Measurement of Haze Value (Cloudiness) -

Next, the haze value (cloudiness) is measured by using the prepared pre-UV irradiation haze measurement element and the haze measurement element. A measurement value of the pre-UV irradiation haze measurement element is used as a reference (a haze value of 0) to calculate an increase rate of the measurement value (haze value) of the haze measurement element with respect to the measurement value of the pre-UV irradiation haze measurement element.
A device used in the measurement is described below.

- Haze measurement device: Haze meter NDH 5000 manufactured by Nippon Denshoku Industries, Co., Ltd.

--Surfactant--

The liquid composition preferably contains a surfactant.
The surfactant is aligned with the gas-liquid interface, and can be used for the purpose of defoaming, lowering surface tension, and smoothing and leveling an upper portion of the liquid film, so-called leveling of the liquid film.
The surfactant is not particularly limited and can be appropriately selected according to a purpose. Suitable examples of the surfactant include, but are not limited to, silicone-based surfactants, acrylic surfactants, and fluorine-based surfactants.
These surfactants may be used alone or in combination of two or more types.
Examples of the silicone-based surfactants include, but are not limited to, the POLYFLOW series KL-400HF, KL-401, KL-402, and KL-406 (all manufactured by Kyoeisha Chemical Co., Ltd.); BYK series UV 3500, UV 3505, UV 3510, UV 3530, UV 3570, UV 3575, and UV 3576 (all manufactured by BYK Chemie Japan Co., Ltd.); and DISPARLON series UVX-272, NSH-8430HF, 1711EF, LS-001, LS-460, and LS-480 (all manufactured by Kusumoto Chemicals, Ltd.).
Examples of the acrylic surfactants include, but are not limited to, the POLYFLOW series No. 7, No. 36, No. 50E, No. 56, No. 75, No. 77, No. 85, No. 85HF, No. 90, No. 90D-50, No. 95, and No. 99C (all manufactured by Kyoeisha Chemical Co., Ltd.); BYK™ series 3440 and 3560 (both manufactured by BYK Chemie Japan Co., Ltd.); DISPARLON series 1970, 230, 230HF, LF-1980, LF-1982, LF-1983, LF-1984, LF-1985, and UVX-36 (all manufactured by Kusumoto Chemicals, Ltd.).
Examples of the fluorine-based surfactants include, but are not limited to, the SURFLON series (manufactured by ACG Seimi Chemical Co., Ltd.); MEGAFACE series RS-56, RS-75, RS-72-K, RS-76-E, RS-76-NS, RS-78, and RS-90 (all manufactured by DIC Corporation).
Examples of other structures include, but are not limited to, BYK™-UV3535 (manufactured by BYK Chemie Japan Co., Ltd.), and the DISPARLON series LHP-90, LHP-91, LHP-95, and LHP-96 (all manufactured by Kusumoto Chemicals, Ltd.).

-- Other Components --

--- Polymerization Initiator ---

The liquid composition may also contain other components such as a polymerization initiator.

The polymerization initiator is a material that can generate an active species such as radicals and cations by using energy such as light and heat, and can initiate polymerization of a polymerizable compound. Examples of the polymerization initiator include, but are not limited to, known radical polymerization initiators, cationic polymerization initiators, and base generators. These polymerization initiators may be used alone or in combination of two or more types. Among these polymerization initiators, photo-radical polymerization initiators are preferred.

The photo-radical polymerization initiators are not particularly limited, and any known photo-radical generator can be appropriately selected according to a purpose. Examples thereof include acetophenone derivatives and photo-radical polymerization initiators such as Michler's ketone, known under the product names IRGACURE and DAROCUR, and benzophenone.

Specific examples of photo-radical polymerization initiators include, but are not limited to, α-hydroxy-acetophenone, α-aminoacetophenone, 4-aroyl-1,3-dioxolane, benzyl ketal, 2,2-diethoxyacetophenone, p-dimethylaminoacetophene, p-dimethylaminopropiophenone, benzophenone, 2-chlorobenzophenone, pp'-dichlorobenzophene, pp'-bisdiethylaminobenzophenone, Michler's ketone, benzyl, benzoin, benzyl dimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-2-methylpropan-1-one, methylbenzoylformate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1, 1-hydroxy-cyclohexyl-phenyl-ketone, 2,2-dimethoxy-1,2-diphenylethan-1-one, bis(η5-2,4-cyclopentadien-1-yl)-bis(2,6-difluoro-3-(1H-pyrrol-1-yl)-phenyl)titanium, bis(2,4,6-trimethylbenzoyl)-phenylphosphine oxide, 2-methyl-1[4-(methylthio)phenyl]-2-morpholinopropan-1-one, 2-hydroxy-2-methyl-1-phenyl-propan-1-one (DAROCUR 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propane-1-one monoacylphosphine oxide, bisacylphosphine oxide; titanocene, fluorescene, anthraquinone, thioxanthone; xanthone, lophine dimer, trihalomethyl compounds; dihalomethyl compounds, active ester compounds, and organoboron compounds.

Further, a photocrosslinking radical generator such as a bisazide compound may be included at the same time. In the case of polymerization by heat, it is possible to use a thermal polymerization initiator such as azobisisobutyronitrile (AIBN), which is a typical radical generator.

To obtain a sufficient curing rate, the content of the polymerization initiator is preferably 0.05 mass% or more and 10.0 mass% or less, and more preferably 0.5 mass% or more and 5.0 mass% or less, when the total mass of the polymerizable compounds is 100.0 mass%.

The liquid composition may be a non-dispersed composition in which the liquid composition does not contain dispersed material, or a dispersion-based composition in which the liquid composition contains dispersed material. However, the liquid composition is preferably a non-dispersed composition.

[Viscosity]

The viscosity of the first liquid composition is preferably 5 mPa·s or more to achieve a stable thickness of the first liquid composition layer, and more preferably 8 mPa·s or more and 20 mPa·s or less so that the first liquid composition can be used as an inkjet ink.

Here, the viscosity is a viscosity measured at a rotation speed of 100 rpm at 25°C, and specifically, a value measured at a rotation speed of 100 rpm by using a TV25-type viscometer (cone plate) can be adopted.

[Hansen Solubility Parameter (HSP)]

The compatibility between the porogen and the polymerizable compound and the compatibility between the porogen and a resin formed by polymerization of the polymerizable compound can be predicted by the Hansen solubility parameter (HSP).

The Hansen solubility parameter (HSP) is a useful tool for predicting the compatibility of two substances and is a parameter discovered by Charles M. Hansen. The Hansen solubility parameter (HSP) is expressed by combining the following three experimentally and theoretically derived parameters (δD, δP, and δH). The unit of the Hansen solubility parameter (HSP) is MPa0.5 or $(J/cm^3)^{0.5}$. In the present embodiment, $(J/cm^3)^{0.5}$ is used.

- δD: Energy derived from London dispersion forces.

- δP: Energy derived from dipole interaction.
- δH: Energy derived from hydrogen bonding forces.

The Hansen solubility parameter (HSP) is a vector quantity represented by (δD, δP, δH), and is expressed by plotting a value in a three-dimensional space (Hansen space) having three parameters as coordinate axes. There are known information sources such as databases for the Hansen solubility parameters (HSP) of commonly used substances. Therefore, it is possible to obtain the Hansen solubility parameter (HSP) of a desired substance by referring to a database, for example. For substances whose Hansen solubility parameters (HSP) are not registered in the database, computer software such as Hansen Solubility Parameters in Practice (HSPiP) may be used for example, to calculate the Hansen solubility parameter from the chemical structure of the substance and the Hansen solubility sphere method described later.

The Hansen solubility parameter (HSP) of a mixture containing two or more substances is calculated as a vector sum of values obtained by multiplying the Hansen solubility parameter (HSP) of each substance with the volume ratio of each substance with respect to the entire mixture. In the present embodiment, the Hansen solubility parameter (HSP) of the liquid (porogen) obtained from a known information source such as a database is referred to as the "Hansen solubility parameter of the liquid".

Further, the relative energy difference (RED) based on the Hansen solubility parameter (HSP) of the solute and the Hansen solubility parameter (HSP) of the solution is expressed by the following equation.

$$\text{Relative Energy Difference (RED)} = \frac{Ra}{Ro} \quad \cdots \text{(Equation)}$$

In the above-described equation, Ra represents an interaction distance between the Hansen solubility parameter (HSP) of the solute and the Hansen solubility parameter (HSP) of the solution, and Ro represents an interaction radius of the solute. The interaction distance (Ra) between Hansen solubility parameters (HSP) indicates the distance between two substances. If the interaction distance is smaller, the two substances are closer to each other in the three-dimensional space (Hansen space), which indicates that the possibility of the two substances dissolving in (being compatible with) each other is higher.

Assuming that the Hansen solubility parameters (HSP) of the substances (a solute A and a solution B) are as follows, Ra can be calculated as described below.

$$HSP^A = (\delta D^A, \delta P^A, \delta H^A)$$

$$HSP^B = (\delta D^B, \delta P^B, \delta H^B)$$

$$Ra = [4 \text{ x } (\delta D^A - \delta D^B)^2 + (\delta P^A - \delta P^B)^2 + (\delta H^A - \delta H^B)^2]^{1/2}$$

For example, Ro (the interaction radius of the solute) can be determined by the Hansen solubility sphere method described below.

- Hansen Solubility Sphere Method -

First, a substance of which Ro is to be determined and several tens of evaluation liquids (the term "liquid" referring to a liquid different from the above-described "liquid (porogen)") having known Hansen solubility parameters (HSP) are prepared, and a compatibility test for determining the compatibility of the target substance with each evaluation liquid is performed. In the compatibility test, the Hansen solubility parameters (HSP) of evaluation liquids that are compatible with the target substance and the Hansen solubility parameters (HSP) of evaluation liquids that are not compatible with the target substance are each plotted on a Hansen space. Based on the plotted Hansen solubility parameter (HSP) of each evaluation liquid, a virtual sphere (Hansen sphere) including the Hansen solubility parameters (HSP) of the group of evaluation liquids that are compatible with the target substance and not including the Hansen solubility parameters (HSP) of the group of evaluation liquids that are not compatible with the target substance is created on the Hansen space. The radius of the Hansen sphere is the interaction radius $R_0$ of the substance, and the center of the Hansen sphere corresponds to the Hansen solubility parameter (HSP) of the substance. Note that the evaluation criteria to

determine the compatibility (criteria for determining whether a substance is compatible) between the substance of which the interaction radius $R_0$ and the Hansen solubility parameter (HSP) are to be determined and the evaluation liquids having a known Hansen solubility parameter (HSP) are set by an evaluator. The evaluation criteria in the present embodiment will be described later.

- Hansen Solubility Parameter (HSP) and Interaction Radius of Polymerizable Compound -

In the present embodiment, the Hansen solubility parameter (HSP) of the polymerizable compound and the interaction radius of the polymerizable compound are determined by the Hansen solubility sphere method. As mentioned above, the criteria for evaluating the compatibility in the Hansen solubility sphere method are set by an evaluator. Therefore, the Hansen solubility parameter (HSP) of the polymerizable compound in the present embodiment determined by the following criteria is expressed as "Hansen solubility parameter C of the polymerizable compound", and the interaction radius of the polymerizable compound is expressed as "interaction radius D of the polymerizable compound". In other words, the "Hansen solubility parameter C of the polymerizable compound" and the "interaction radius D of the polymerizable compound" are different from the "Hansen solubility parameter of the liquid" obtained from a known information source such as a database, and are obtained based on the Hansen solubility sphere method, which includes the criteria for evaluating the compatibility set by the evaluator.

The Hansen solubility parameter C of the polymerizable compound and the interaction radius D of the polymerizable compound are determined in accordance with the following [1-1] and the measurement method of the light transmittance described above, and are determined by evaluating the compatibility of the polymerizable compound with respect to the evaluation liquids (an evaluation based on "the light transmittance at a wavelength of 550 nm of a composition for measuring the transmittance measured while stirring the composition for measuring the transmittance containing the polymerizable compound and the evaluation liquid").

[1-1] Preparation of Compositions for Measuring Transmittance

First, a polymerizable compound of which the Hansen solubility parameter (HSP) is to be determined and several tens of evaluation liquids having known Hansen solubility parameters (HSP) are prepared. The polymerizable compound, the evaluation liquids, and a polymerization initiator are mixed in the ratio indicated below to prepare compositions for measuring the transmittance. As the several tens of evaluation liquids having known Hansen solubility parameters (HSP), the 21 types of evaluation liquids described below are used.

~ Ratio of Compositions for Measuring Transmittance ~

- Polymerizable compound of which Hansen solubility parameter (HSP) is to be determined: 28.0 mass%
- Evaluation liquid having known Hansen solubility parameter (HSP): 70.0 mass%
- Polymerization initiator (IRGACURE 819, manufactured by BASF): 2.0 mass%

~ Group of Evaluation Liquids (21 types) ~

Ethanol, 2-propanol, mesitylene, dipropylene glycol monomethyl ether, N-methyl 2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

- Hansen Solubility Parameter (HSP) and Interaction Radius of Resin Formed by Polymerization of Polymerizable Compound -

The Hansen solubility parameter (HSP) of the resin formed by polymerization of the polymerizable compound and the interaction radius of the resin formed by polymerization of the polymerizable compound are determined by the Hansen solubility sphere method. As mentioned above, the criteria for evaluating the compatibility in the Hansen solubility sphere method are set by the evaluator. Therefore, the Hansen solubility parameter (HSP) of the resin formed by polymerization of the polymerizable compound in the present embodiment determined by the following criteria is expressed as "Hansen solubility parameter A of the resin", and the interaction radius of the resin formed by polymerization of the polymerizable compound is expressed as "interaction radius B of the resin". In other words, the "Hansen solubility parameter A of the resin" and the "interaction radius B of the resin" are different from the "Hansen solubility parameter

of the liquid" obtained from a known information source such as a database, and are obtained based on the Hansen solubility sphere method, which includes the criteria for evaluating the compatibility set by the evaluator.

The Hansen solubility parameter A of the resin and the interaction radius B of the resin are determined in accordance with the following [2-1] and the method of measuring the increase rate of the haze value described above and are determined by evaluating the compatibility of the resin with evaluation liquids (an evaluation based on "the increase rate of the haze value (cloudiness) in a haze measurement element prepared by using a composition for haze measurement containing the polymerizable compound and the evaluation liquid").

[2-1] Preparation of Compositions for Haze Measurement

First, a resin precursor (polymerizable compound) of which the Hansen solubility parameter (HSP) is to be determined and several tens of evaluation liquids having known Hansen solubility parameters (HSP) are prepared. The polymerizable compound, the evaluation liquids, and a polymerization initiator are mixed in the ratio indicated below to prepare compositions for haze measurement. As the several tens of evaluation liquids having known Hansen solubility parameters (HSP), the 21 types of evaluation liquids described below are used.

~ Ratio of Compositions for Haze Measurement ~

- Resin precursor (polymerizable compound) for which Hansen solubility parameter (HSP) is to be determined: 28.0 mass%
- Evaluation liquid having known Hansen solubility parameter (HSP): 70.0 mass%
- Polymerization initiator (IRGACURE 819, manufactured by BASF): 2.0 mass%

~ Group of Evaluation Liquids (21 types) ~

Ethanol, 2-propanol, mesitylene, dipropylene glycol monomethyl ether, N-methyl 2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

Relative Energy Difference (RED) based on Hansen Solubility Parameters (HSP) of Resin and Liquid (Porogen)

The relative energy difference (RED) calculated based on Equation 1 below is preferably 1.00 or more, more preferably 1.10 or more, even more preferably 1.20 or more, and particularly preferably 1.30 or more. Equation 1 uses the Hansen solubility parameter A of a resin formed by polymerization of a polymerizable compound, determined, as described above, based on the increase rate of the haze value (cloudiness) in a haze measurement element prepared by using a composition for haze measurement including a polymerizable compound and an evaluation liquid; the interaction radius B of the resin; and the Hansen solubility parameter of the porogen.

$$\text{Relative Energy Difference (RED)} = \frac{\text{Distance between "Hansen solubility parameter A of resin" and "Hansen solubility parameter of solvent"}}{\text{"Interaction radius B of resin"}} \quad \cdots \text{(Equation 1)}$$

The relative energy difference (RED) determined based on the Hansen solubility parameters (HSP) of the resin and the porogen is preferably 1.00 or more, because in this case, the porogen and the resin formed by polymerization of the polymerizable compound in the liquid composition are likely to cause phase separation, so that a porous resin is more likely to be formed.

- Relative Energy Difference (RED) based on Hansen Solubility Parameters (HSP) of Polymerizable Compound and Liquid (Porogen) -

The relative energy difference (RED) calculated based on the Equation 2 below is preferably 1.05 or less, more preferably 0.90 or less, even more preferably 0.80 or less, and particularly 0.70 or less. Equation 2 uses the Hansen solubility parameter C of the polymerizable compound determined, as described above, based on the light transmittance

at a wavelength of 550 nm of the composition for measuring the transmittance, measured while stirring the composition for measuring the transmittance containing the polymerizable compound and the evaluation liquid; the interaction radius D of the polymerizable compound determined based on the compatibility of the polymerizable compound and the evaluation liquid; and the Hansen solubility parameter of the liquid.

$$\text{Relative Energy Difference (RED)} = \frac{\text{Distance between "Hansen solubility parameter C of polymerizable compound" and "Hansen solubility parameter of solvent"}}{\text{"Interaction radius D of polymerizable compound"}} \quad \text{... (Equation 2)}$$

When the relative energy difference (RED) determined based on the Hansen solubility parameters (HSP) of the polymerizable compound and the porogen is 1.05 or less, the polymerizable compound and the porogen are likely to be compatible. When the RED is closer to 0, the polymerizable compound and the porogen are more likely to be compatible. Therefore, if the relative energy difference (RED) is 1.05 or less, a liquid composition is obtained that has high dissolution stability so that, after the polymerizable compound is dissolved in the porogen, the polymerizable compound does not precipitate over time. The polymerizable compound is highly dissolvable in the porogen, and thus, it is possible to maintain the discharge stability of the liquid composition. Therefore, the liquid composition of the present embodiment can also be suitably applied to a method of discharging a liquid composition such as an inkjet method. Further, the relative energy difference (RED) is 1.05 or less, and thus, separation between the polymerizable compound and the porogen is suppressed in a state before the start of the polymerization reaction of the liquid composition, and the formation of an irregular or non-uniform porous resin is suppressed.

<Method of Manufacturing First Liquid Composition>

The method of manufacturing the first liquid composition is not particularly limited and may be appropriately selected according to a purpose. However, the first liquid composition is preferably prepared by a step of dissolving a polymerization initiator in a polymerizable compound, a step of further dissolving a porogen and other components, and a step of stirring the obtained mixture to obtain a uniform solution.

(Electrode)

The electrode of the present embodiment includes an electrode base and an electrode composite layer provided on the electrode base and a resin structure layer provided in an adjacent portion of the electrode composite layer and formed by polymerizing a liquid composition containing a polymerizable compound.

Further, in one aspect of the present embodiment, the electrode preferably satisfies at least one of the following (1) to (3), and more preferably satisfies all of (1) to (3).

(1) The electrode composite layer contacts and continues from an end surface of the resin structure layer, and covers an end portion of the resin structure layer contacting the electrode base.
(2) The area of a surface of the electrode composite layer not contacting the electrode base is equal to or larger than the area of a surface of the electrode composite layer contacting the electrode base.
(3) A ratio (B/A) of an average thickness B of the resin structure layer to an average thickness A of the electrode composite layer is 0.97 or more and 1.03 or less.

The average thickness A of the electrode composite layer refers to an average thickness of the electrode composite layer on a plateau surface, and can be calculated by measuring the thickness at any three or more locations on the plateau surface and determining an average of the measured thickness values.

The average thickness B of the resin structure layer refers to an average thickness of the resin structure layer on the plateau surface, and can be calculated by measuring the thickness at any three or more locations and determining an average of the measured thickness values.

The electrode of the present embodiment can be suitably manufactured by the method of manufacturing an electrode according to the present embodiment, the process is simplified, the productivity is excellent, and an electrode with suppressed curling of the electrode base can be manufactured.

In one aspect of the present embodiment, an electrode satisfying (1) to (3) above can be suitably manufactured by the method of manufacturing an electrode according to the present embodiment including the first application step, the polymerization step, and the second application step in this order, and in which the second application step is a step of applying the second liquid composition to a location adjacent to the resin structure layer on the electrode base.

Further, in one aspect of the present embodiment, an electrode satisfying (1) to (3) above can be suitably

manufactured by the method of manufacturing an electrode according to the present embodiment in which the polymerization step is implemented after the first application step and the second application step are implemented simultaneously or sequentially, and the first liquid composition and the second liquid composition are applied to locations adjacent to each other.

(Electrode Laminate Body)

An electrode laminate body of the present embodiment includes the above-described electrode of the present embodiment and a solid electrolyte layer provided on the electrode.

In other words, the electrode laminate body of the present embodiment includes an electrode base, an electrode composite layer provided on the electrode base, a resin structure layer provided in an adjacent portion of the electrode composite layer and formed by polymerizing a liquid composition containing a polymerizable compound, and a solid electrolyte layer provided on the electrode composite layer and the resin structure layer.

The electrode composite layer contacts and continues from an end surface of the resin structure layer, and covers an end portion of the resin structure layer contacting the electrode base. The area of a surface of the electrode composite layer not contacting the electrode base is equal to or larger than the area of a surface of the electrode composite layer contacting the electrode base. The ratio (B/A) of the average thickness B of the resin structure layer to the average thickness A of the electrode composite layer is preferably 0.97 or more and 1.03 or less.

FIG. 1A is a diagram illustrating an electrode of the present embodiment. FIG. 1A is a cross-sectional view of an electrode 25 serving as a first electrode. The electrode 25 as the first electrode includes an electrode base 21 and an electrode composite layer 20 on the electrode base 21. The resin structure layer 10 is arranged at an outer peripheral portion of the electrode composite layer 20. The electrode composite layer 20 contacts and continues from an end surface of the resin structure layer 10, and covers an end portion of the resin structure layer 10 contacting the electrode base 21.

In the configuration illustrated in FIG. 1A, the electrode composite layer 20 and the resin structure layer 10 are provided on one surface of the electrode base 21. However, the electrode composite layer 20 and the resin structure layer 10 may be provided on the two opposing surfaces of the electrode base 21.

FIG. 1B is a diagram illustrating another electrode of the present embodiment. In the electrode of FIG. 1B, the electrode composite layer 20 contacts and continues from an end surface of the resin structure layer 10, and covers an end portion of the resin structure layer 10 contacting the electrode base 21. The area of a surface of the electrode composite layer 20 not contacting the electrode base 21 is equal to or larger than the area of a surface of the electrode composite layer 20 contacting the electrode base 21. A ratio (B/A) of an average thickness B of the resin structure layer 10 to an average thickness A of the electrode composite layer 20 is 0.97 or more and 1.03 or less.

FIG. 2 is a diagram illustrating an electrode laminate body of the present embodiment. FIG. 2 is a cross-sectional view of an electrode laminate body 35. The electrode laminate body 35 includes the electrode base 21, the electrode composite layer 20 on the electrode base 21, the resin structure layer 10 at an outer peripheral portion of the electrode composite layer 20, and a solid electrolyte layer 30 on the electrode composite layer 20 and the resin structure layer 10. The electrode composite layer 20 contacts and continues from an end surface of the resin structure layer 10, and covers an end portion of the resin structure layer 10 contacting the electrode base 21.

In the configuration illustrated in FIG. 2, the electrode composite layer 20, the resin structure layer 10, and the solid electrolyte layer 30 are provided on one surface of the electrode base 21. However, the electrode composite layer 20, the resin structure layer 10, and the solid electrolyte layer 30 may be provided on the two opposing surfaces of the electrode base 21.

FIG. 3 is a diagram illustrating an electrochemical element of the present embodiment, which will be described later. FIG. 3 is a cross-sectional view of an electrochemical element 45. The electrochemical element 45 includes, on the electrode laminate body 35, a second electrode including an electrode base 41 and an electrode composite layer 40 on the electrode base 41. The solid electrolyte layer 30 and the electrode composite layer 40 face each other. The electrochemical element 45 is a single cell layer, and the single cell layers can be laminated to form a laminated battery.

In the configuration illustrated in FIG. 3, the electrode composite layer 20, the resin structure layer 10, and the solid electrolyte layer 30 are provided on one surface of the electrode base 21. However, the electrode composite layer 20, the resin structure layer 10, and the solid electrolyte layer 30 may be provided on the two opposing surfaces of the electrode base 21 and this configuration may be laminated to obtain a laminated battery.

The shapes of the resin structure layer and the first liquid composition layer, the shapes of the electrode composite layer and the second liquid composition layer, and regions where the resin structure layer, the first liquid composition layer, the electrode composite layer, and the second liquid composition layer are provided will be described with reference to the drawings.

The shapes of the resin structure layer and the electrode composite layer will be described. Note that the resin structure layer 10 is formed by polymerization of a first liquid composition layer 11, and the electrode composite layer

20 is formed from a second liquid composition layer 12. Therefore, the description relating to the resin structure layer 10 also applies to the first liquid composition layer 11, and the description relating to the electrode composite layer 20 also applies to the second liquid composition layer 12.

FIGs. 4 to 6 are top views of the electrode 25 illustrated in FIGs. 1A and 1B for explaining processes of manufacturing the electrode.

In FIG. 4, the resin structure layer 10 is provided adjacent to two sides of the electrode composite layer 20. In FIG. 5, each of the two regions of the resin structure layer 10 is provided adjacent to one of the long sides of the electrode composite layer 20 and to the two corners of the long side.

Further, as illustrated in FIG. 6, the resin structure layer 10 may be provided continuously adjacent to all four sides of the electrode composite layer 20, or may be provided intermittently adjacent to the four sides.

Here, the expression the resin structure layer is provided in an "adjacent portion of the electrode composite layer" means that the resin structure layer and the electrode composite layer are provided adjacent to each other. The resin structure layer may be provided in an outer peripheral portion of the electrode composite layer, and if the electrode composite layer includes an opening portion or an uncoated portion, the resin structure layer may be provided on an inner peripheral portion of the electrode composite layer, or a combination of these two configurations may be used.

When the resin structure layer is provided in an "outer peripheral portion of the electrode composite layer", it is sufficient that the resin structure layer is provided on at least two sides of the outer peripheral portion of the electrode composite layer, and the resin structure layer may be provided on three sides or may be provided on four sides (all sides) of the outer peripheral portion of the electrode composite layer. Further, the resin structure layer may have a recessed portion or a notch portion so that the electrode tab protrudes on any side.

The expression provided in the "outer peripheral portion of the electrode base" means that the resin structure layer may be provided to include an end portion of the electrode base, and the resin structure layer may be provided so that a space is formed around the resin structure layer between the electrode base and the resin structure layer, as illustrated in FIGs. 4 to 6.

Note that, the expression "the electrode composite layer contacts and continues from an end surface of the resin structure layer" means that it is sufficient that a continuous area of 90% or more of one end surface of the electrode composite layer contacts the end surface of the resin structure layer. Specifically, it means that a continuous area of one end surface of the electrode composite layer 20 excluding an end portion (a corner portion) of each side of the electrode composite layer contacts an adjacent end surface of the resin structure layer.

That is, "a continuous area of 90% or more of one end surface of the electrode composite layer" is, for example, a region represented by a hatched portion of the electrode composite layer 20 in FIGs. 4 to 6.

Further, when the resin structure layer is provided intermittently adjacent to one end surface of the electrode composite layer 20, a region where the resin structure layer is not provided, which is formed when the resin structure layer is provided intermittently, is not included in the "continuous area of 90% or more of one end surface of the electrode composite layer".

As described above, the resin structure layer is provided on at least two sides of the four sides of the end surface of the outer peripheral portion of the electrode composite layer, and may be provided on three sides, or may be provided on all four sides. However, it is sufficient that at least one side of the electrode composite layer satisfies the condition that "the electrode composite layer contacts and continues from an end surface of the resin structure layer", and it is preferable that two sides of the electrode composite layer satisfy the condition.

Further, when the resin structure layer is provided on three sides or on all four sides of the electrode composite layer, it is preferable that the three sides or all of the four sides of the electrode composite layer satisfy the condition in which "the electrode composite layer contacts and continues from an end surface of the resin structure layer".

<Electrode (First Electrode, Second Electrode)>

The electrode includes an electrode base, an electrode composite layer, and a resin structure layer.

A negative electrode and a positive electrode are collectively referred to as an "electrode". A negative electrode base and a positive electrode base are collectively referred to as an "electrode base". A negative electrode composite layer and a positive electrode composite layer are collectively referred to as an "electrode composite layer".

Further, when the first electrode is a negative electrode, the second electrode expresses a positive electrode, and when the first electrode is a positive electrode, the second electrode expresses a negative electrode.

<Electrode Base>

The electrode base is not particularly limited, as long as the electrode base is formed of a base material that is conductive and stable against an applied potential. Examples of the electrode base include, but are not limited to, aluminum foil, copper foil, stainless steel foil, titanium foil, and etched foils obtained by etching these materials to form

small holes, and perforated electrode bases used in lithium ion capacitors.

<Electrode Composite Layer>

The electrode composite layer is formed from the first liquid composition and the first liquid composition layer, contains an active material, and if desired, may further contain other components such as a dispersion medium, a dispersant, a conductive auxiliary agent, a binder, a non-aqueous electrolyte, a solid electrolyte, and a gel electrolyte. The items described in the method of manufacturing an electrode according to the present embodiment can be appropriately selected as these components.

<Resin Structure Layer>

The resin structure layer is provided on the outer peripheral portion of the electrode composite layer provided on the electrode base, and on the outer peripheral portion of the electrode base.

The resin structure layer is a resin structure layer formed by polymerization of a first liquid composition containing a polymerizable compound and a first solvent.

The resin structure layer is preferably porous, and more preferably has a co-continuous structure having a resin as a backbone.

It is preferable that the resin structure layer has pores of 0.01 μm or more and 10 μm or less.

It is preferable that the resin structure layer has insulating properties. In the present specification and the claims, the fact that the resin structure layer has insulating properties means that the resin structure layer has a specific volume resistivity of $1 \times 10^{12}$ (Ω·cm) or more.

Here, the "co-continuous structure" refers to a structure in which two or more substances or phases each have a continuous structure and do not form an interface, and in the present embodiment, refers to a structure in which a resin phase and a pore phase form together a three-dimensional continuous branched network phase. Such a structure can be formed by polymerizing a later-described liquid composition by using a polymerization-induced phase separation method, for example.

The compression rate of the resin structure layer after pressing at 500 MPa for 5 minutes is not particularly limited and can be appropriately selected according to a purpose. However, the compression rate is preferably 1% or more and 50% or less, and more preferably 5% or more and 20% or less.

From the viewpoint of the strength of the resin structure layer, when the compression rate is 50% or less, the shape of the resin structure layer can be sufficiently maintained during the pressing step. When the compression rate is 1% or more, the pressure applied from the resin structure layer to the solid electrolyte layer can be alleviated in the pressing step after forming the solid electrolyte layer.

The resin structure layer has a co-continuous structure, so that, when trying to form the electrode composite layer and the resin structure layer with a substantially equal thickness, it is possible to easily control the thickness of the resin structure layer with high precision by pressing. Further, the thickness of the resin structure layer can be easily controlled by forming the resin structure layer by coating and a polymerization-induced phase separation method described later. A porous resin layer having a co-continuous structure can efficiently release the pressure generated during pressing, so that defects such as damage of the resin layer and uneven height differences are suppressed, and a resin layer of good quality can be obtained.

In an electrochemical element in which a short circuit may occur due to dendrite precipitation, the negative electrode composite layer is generally larger than the positive electrode composite layer. At this time, if a positive electrode current collector and a negative electrode current collector have substantially the same size, an excess portion is formed where the positive electrode composite layer is not formed in a region of the positive electrode current collector facing the negative electrode composite layer of the negative electrode. From the viewpoint of characteristics of an electrical device, the resin structure layer is preferably provided in the excess portion of the positive electrode, that is, in an outer peripheral portion of the positive electrode composite layer. When forming an electrochemical element, if a configuration is adopted in which the negative electrode composite layer is smaller than the positive electrode composite layer, it is preferable that the resin structure layer is provided in the excess portion of the negative electrode, that is, in an outer peripheral portion of the negative electrode composite layer.

An example of a method for confirming that the porous structure body includes a co-continuous structure and the pores communicate with each other includes, but is not limited to, a method of using a scanning electron microscope (SEM) to observe an image of a cross section of the porous structure body to confirm that the pores are continuously connected. Further, air permeability is an example of the physical properties obtained by the fact that the pores communicate.

[Image Observation by Scanning Electron Microscope (SEM) and Porosity Measurement]

The porosity of the porous structure body is preferably 30% or more, and more preferably 50% or more. Further, the porosity is preferably 90% or less, and more preferably 85% or less.
When the porosity is 30% or more, the pressure applied from the resin structure layer to the solid electrolyte layer can be alleviated in the pressing step after forming the solid electrolyte layer. From the viewpoint of the strength of the resin structure layer, when the porosity is 90% or less, the shape of the resin structure layer can be sufficiently maintained during the pressing step.
A method of evaluating the porosity of the porous structure body is not particularly limited and can be appropriately selected according to a purpose. An example of the method includes a method in which osmium staining is applied to the porous structure body, and then, the porous structure body is vacuum-impregnated with an epoxy resin. A focused ion beam (FIB) is used to cut out a cross-sectional structure of an inner portion of the porous structure body, and the porosity is measured by using a scanning electron microscope (SEM).

[Air Permeability]

The air permeability of the porous structure body is preferably 1,000 seconds/100 mL or less, more preferably 500 seconds/100 mL or less, and even more preferably 300 seconds/100 mL or less.
The air permeability refers to the air permeability in conformity with Japanese Industrial Standards (JIS) P8117 and can be measured by using a Gurley densometer (manufactured by Toyo Seiki Seisaku-sho, Ltd.), for example.
For example, it may be determined that the pores communicate with each other, when the air permeability is 1,000 seconds/100 mL or less.
The cross-sectional shape of the holes in the porous resin may have various sizes and various shapes, such as a substantially circular shape, a substantially elliptical shape, and a substantially polygonal shape. Here, the size of the holes refers to a length of the longest portion in the cross-sectional shape. The size of the holes can be determined from a cross-sectional image captured with a scanning electron microscope (SEM).
The size of the holes of the porous resin is not particularly limited and can be appropriately selected according to a purpose. However, a ratio between the size of the holes and the median diameter of the solid electrolyte contained in the liquid composition for forming the solid electrolyte layer provided on the resin structure layer is preferably less than 1, and more preferably 0.8 or less. When the size of the holes is larger than the median diameter of the solid electrolyte, the solid electrolyte easily enters into the holes of the resin structure layer. When the size of the holes and the median diameter of the solid electrolyte are within the range mentioned above, it is possible to obtain a structure in which the solid electrolyte is hardly contained in the resin structure layer, which is advantageous for dispersing pressure during pressing and alleviating pressure applied from the resin structure layer to the solid electrolyte.
A method of adjusting the size of the holes and the porosity of the porous resin to the above-described ranges is not particularly limited. However, examples of the method include, but are not limited to, a method of adjusting the content of the polymerizable compound in the liquid composition to the above-described range, a method of adjusting the content of the porogen in the liquid composition to the above-described range, and a method of adjusting the irradiation conditions of active energy rays.
The average thickness of the resin structure layer is not particularly limited and can be appropriately selected depending on various types of conditions such as the average thickness of the electrode composite layer. However, the average thickness of the resin structure layer is preferably 1.0 μm or more and 150.0 μm or less, and more preferably 10.0 μm or more and 100.0 μm or less. When the average thickness is 10.0 μm or more, it is possible to disperse the pressure load and prevent short circuits between the positive electrode and the negative electrode. When the average thickness is 100.0 μm or less, it is possible to manufacture an electrochemical element having high density and excellent battery characteristics.
The average thickness can be determined by measuring the thickness at any three or more locations and calculating the average of the three values.

<Solid Electrolyte Layer>

The materials mentioned as the solid electrolyte of the electrode composite layer can be appropriately selected and used as the solid electrolyte of the solid electrolyte layer.
The solid electrolyte layer may include a binder, and examples of the binder include, but are not limited to, thermoplastic resins such as polyvinylidene fluoride (PVDF), acrylic resins, styrene-butadiene rubber, polyethylene, polypropylene, polyurethane, nylon, polytetrafluoroethylene, polyphenylene sulfide, polyethylene terephthalate, and polybutylene terephthalate, polyamide compounds, polyimide compounds, polyamide-imides, ethylene-propylene-butadiene rubber (EPBR), styrene-butadiene rubber (SBR), nitrile butadiene rubber (NBR), polymethyl methacrylate (PMMA),

polybutyl methacrylate (PBMA), isoprene rubber, polyisobutene, polyethylene glycol (PEO), and polyethylene vinyl acetate (PEVA).

(Method of Manufacturing Electrode Laminate Body and Electrode Laminate Body Manufacturing Apparatus)

The method of manufacturing an electrode laminate body of the present embodiment includes an electrode manufacturing step of manufacturing an electrode by the above-described electrode manufacturing method of the present embodiment, and a solid electrolyte layer forming step, and further includes another step such as a pressing step, if desired.

In other words, the method of manufacturing an electrode laminate body of the present embodiment includes at least a first application step, a polymerization step, a second application step, and a removal step.

The electrode laminate body manufacturing apparatus of the present embodiment includes an electrode manufacturing unit that manufactures an electrode by the above-described electrode manufacturing apparatus of the present embodiment, and a solid electrolyte layer forming unit, and further includes other unit such as a pressing unit, if desired.

In other words, the electrode laminate body manufacturing apparatus of the present embodiment includes at least a first storage container, a second storage container, a first application unit, a polymerization unit, a second application unit, and a removal unit.

The first application step, the polymerization step, the second application step, the removal step, the first storage container, the second storage container, the first application unit, the polymerization unit, the second application unit, and the removal unit can be appropriately selected from the items described in the method of manufacturing an electrode and the electrode manufacturing apparatus of the present embodiment described above.

<Solid Electrolyte Layer Forming Step, Solid Electrolyte Layer Forming Unit>

The solid electrolyte layer forming step is a step of forming a solid electrolyte layer on the electrode composite layer and the resin structure layer, and can be suitably implemented by the solid electrolyte layer forming unit.

The solid electrolyte layer forming unit is a unit that forms a solid electrolyte layer on the electrode composite layer and the resin structure layer.

The method of forming the solid electrolyte layer is not particularly limited and can be appropriately selected according to a purpose. An example of the method includes, but is not limited to, a method in which a liquid composition containing the solid electrolyte and, if desired, the binder, is applied onto the electrode composite layer and the resin structure layer, solidified, and dried.

The coating method is not particularly limited, and examples thereof include liquid discharge methods such as an inkjet method, a spray coating method, and a dispenser method, a spin coating method, a casting method, a microgravure coating method, a gravure coating method, a bar coating method, a roll coating method, a wire bar coating method, a dip coating method, a slit coating method, a capillary coating method, a nozzle coating method, a gravure printing method, a screen printing method, a flexographic printing method, an offset printing method, and a reverse printing method.

<Pressing Step, Pressing Unit>

The pressing step is a step of pressing the electrode composite layer and the resin structure layer, and can be suitably implemented by the pressing unit.

The pressing unit is a unit that presses the electrode composite layer and the resin structure layer.

By implementing the pressing step, the electrode composite layer and the resin structure layer can be formed with substantially equal average thickness. Therefore, even when high pressure is applied to press the solid electrolyte layer provided on the electrode, the pressure load can be dispersed excellently.

The timing of implementing the pressing step is not particularly limited and can be appropriately selected according to a purpose. For example, the electrode composite layer and the resin structure layer may be pressed after forming the electrode composite layer and the resin structure layer on the electrode base. Alternatively, if the thickness of the resin structure layer before pressing and the thickness of the electrode composite layer are substantially equal, pressing may be performed after further providing a solid electrolyte layer. Further, pressing may be performed at both of these timings.

The pressing method is not particularly limited and can be implemented by using a commercially available press-molding device. It is sufficient that the electrode composite layer and the resin structure layer are pressed in the direction of the electrode base and examples of the pressing method include, but are not limited to, uniaxial pressing, roll pressing, cold isostatic pressing (CIP), and hot pressing. Among these pressing methods, cold isostatic pressing (CIP), which can apply isostatic pressure, is preferred.

The pressure used in the pressing is preferably a pressure at which it is possible to compact the electrode composite layer while pressing the electrode base and the electrode composite layer, and is preferably 1 MPa to 900 MPa, and more preferably 50 MPa to 300 MPa.

[Embodiment for Forming Resin Structure Layer or Electrode by Application of Liquid Composition to Base Material]

FIGs. 7A and 7B are schematic diagrams illustrating a method of manufacturing an electrode according to the present embodiment.

An electrode manufacturing apparatus 500 is an apparatus that manufactures a resin structure layer by using the above-described first liquid composition. The electrode manufacturing apparatus includes a first printing portion 100 that performs a first application process of applying a first liquid composition onto a printing base material 4 to form a first liquid composition layer, a second printing portion 200 that performs a second application process of applying a second liquid composition to form a second liquid composition layer, a polymerization portion 300 that performs a polymerization process of polymerizing the first liquid composition layer by application of heat or light, and a removal portion 400 that performs a heating process of heating the resin structure layer 10 including the first solvent, to remove the first solvent in the pores of the resin structure layer 10 and obtain the resin structure layer 10, and remove the second solvent included in the electrode composite layer. The electrode manufacturing apparatus 500 includes a conveyance portion 5 that conveys the printing base material 4. The conveyance portion 5 conveys the printing base material 4 at a preset speed to the first printing portion 100, the second printing portion 200, the polymerization portion 300, and the removal portion 400 in this order.

The printing base material 4 is an electrode base.

- First Printing Portion 100 -

The first printing portion 100 includes a printing device 1a, which is an example of the application unit used for implementing the first application step of applying a first liquid composition 7 for forming a resin structure layer on the printing base material 4, a storage container 1b storing the first liquid composition 7, and a supply tube 1c that supplies the first liquid composition 7 stored in the storage container 1b to the printing device 1a.

The storage container 1b accommodates the first liquid composition 7. The first printing portion 100 discharges the first liquid composition 7 from the printing device 1a and applies the first liquid composition 7 onto the printing base material 4 to form the first liquid composition layer 11 as a thin film. The storage container 1b may be integrally formed with the resin structure layer manufacturing apparatus or may be removable from the resin structure layer manufacturing apparatus. Further, the storage container 1b may be a container used for addition to a storage container integrally formed with the resin structure layer manufacturing apparatus or a storage container removable from the resin structure layer manufacturing apparatus.

The storage container 1b and the supply tube 1c can be freely selected, as long as the storage container 1b and the supply tube 1c can stably store and supply the first liquid composition 7. It is preferable that the material forming the storage container 1b and the supply tube 1c has light-shielding properties in a relatively short wavelength region of ultraviolet and visible light. This prevents external light from initiating polymerization of the first liquid composition 7.

- Second Printing Portion 200 -

The second printing portion 200 includes a printing device 2a, which is an example of the application unit used for implementing the second application step of applying a second liquid composition 8 for forming an electrode composite layer on the printing base material 4, a storage container 2b storing the second liquid composition 8, and a supply tube 2c that supplies the second liquid composition 8 stored in the storage container 2b to the printing device 2a.

The storage container 2b accommodates the second liquid composition 8. The second printing portion 200 discharges the second liquid composition 8 from the printing device 2a and applies the second liquid composition 8 onto the printing base material 4 to form the second liquid composition layer as a thin film. The storage container 2b may be integrally formed with the resin structure layer manufacturing apparatus or may be removable from the resin structure layer manufacturing apparatus. Further, the storage container 2b may be a container used for addition to a storage container integrally formed with the resin structure layer manufacturing apparatus or a storage container removable from the resin structure layer manufacturing apparatus.

The storage container 2b and the supply tube 2c can be freely selected, as long as the storage container 2b and the supply tube 2c can stably store and supply the second liquid composition 8. It is preferable that the material forming the storage container 2b and the supply tube 2c has light-shielding properties in a relatively short wavelength region of ultraviolet and visible light. This prevents external light from initiating polymerization of the second liquid composition 8.

As illustrated in FIG. 7A, the polymerization by the polymerization portion 300 may be performed after the processes of the first printing portion 100 (first application portion) and the second printing portion 200 (second application portion) are performed sequentially or simultaneously. As illustrated in FIG. 7B, the first printing portion 100 (first application portion), the polymerization portion 300, and the second printing portion 200 (second application portion) may be provided in this order.

- Polymerization Portion 300 -

As illustrated in FIGs. 7A and 7B, in the case of photopolymerization, the polymerization portion 300 includes a light irradiation device 3a, which is an example of a polymerization unit used for implementing the polymerization step, and a polymerization-inactive gas circulation device 3b for circulating a polymerization-inactive gas. The light irradiation device 3a irradiates the first liquid composition layer 11 formed by the first printing portion 100 with light in the presence of the polymerization-inactive gas, and causes the first liquid composition layer 11 to polymerize by photopolymerization, to obtain the resin structure layer 10 including the first solvent.

The light irradiation device 3a is appropriately selected in accordance with the absorption wavelength of a photopolymerization initiator contained in the liquid composition layer, and is not particularly limited as long as the light irradiation device 3a can initiate and advance the polymerization of the compound in the liquid composition layer. Examples of the light irradiation device 3a include, but are not limited to, ultraviolet light sources such as high-pressure mercury lamps, metal halide lamps, hot cathode tubes, cold cathode tubes, and LEDs. However, light having a shorter wavelength generally tends to reach deeper parts, and thus, it is preferable to select a light source in accordance with the thickness of a porous film to be formed.

If the irradiation intensity of the light source of the light irradiation device 3a is too strong, the polymerization proceeds rapidly before the phases are sufficiently separated, and thus, it is more difficult to obtain a porous structure. Further, if the irradiation intensity is too weak, phase separation proceeds on the microscale or on a larger scale, and thus, the porosity tends to vary and the porous structure tends to become coarse. Moreover, the irradiation time also increases, so that the productivity is likely to decrease. Therefore, the irradiation intensity is preferably 10 $mW/cm^2$ or more and 1 $W/cm^2$ or less, and more preferably 30 $mW/cm^2$ or more and 300 $mW/cm^2$ or less.

The polymerization-inactive gas circulation device 3b lowers the concentration of oxygen, which is polymerization-active and present in the atmosphere, to cause a polymerization reaction of the polymerizable compound to proceed unhindered near the surface of the first liquid composition layer 11. Therefore, the polymerization-inactive gas being used is not particularly limited, as long as the polymerization-inactive gas satisfies the above-described functions. Examples of the polymerization-inactive gas include, but are not limited to, nitrogen, carbon dioxide, and argon.

From the viewpoint of efficiently obtaining an effect of reducing hindrance to the polymerization, the $O_2$ concentration of the polymerization-inactive gas is preferably less than 20% (an environment where the oxygen concentration is lower than in the atmosphere), more preferably 0% or more and 15% or less, and even more preferably 0% or more and 5% or less. It is preferable that the polymerization-inactive gas circulation device 3b includes a temperature adjustment unit that adjusts the temperature, to realize stable conditions for promoting polymerization.

In the case of thermal polymerization, the polymerization portion 300 may be a heating device. The heating device is not particularly limited and can be appropriately selected according to a purpose. Examples of the heating device include, but are not limited to, a substrate heating device (for example, a hot plate), an IR heater, and a hot air heater, and further, these unit may be combined.

The heating temperature, the time, and the light irradiation conditions can be appropriately selected in accordance with the polymerizable compound contained in the first liquid composition 7 and the thickness of the film to be formed.

- Removal Portion 400 -

As illustrated in FIGs. 7A and 7B, the removal portion 400 includes a heating device 4a and performs a removal step in which the heating device 4a heats the electrode composite layer and the resin structure layer 10 formed by the polymerization portion 300 and containing the first solvent, to dry and remove the remaining first solvent and second solvent. Thus, it is possible to form the resin structure layer 10. The removal portion 400 may remove the liquid under reduced pressure.

The removal portion 400 performs a polymerization promotion step in which the heating device 4a heats the resin structure layer 10 including the first solvent, to further promote the polymerization reaction performed by the polymerization portion 300, and an initiator removal step in which the heating device 4a heats, dries, and removes the photopolymerization initiator remaining in the resin structure layer 10. The polymerization promotion step and the initiator removal step may not be performed simultaneously with a liquid removal step, but may be performed before or after the liquid removal step.

After the liquid removal step, the removal portion 400 performs a polymerization completion step of heating the

porous material under reduced pressure. The heating device 4a is not particularly limited, as long as the heating device 4a satisfies the above-described functions. Examples of the heating device 4a include, but are not limited to, an IR heater and a hot air heater.

The heating temperature and the time can be appropriately selected in accordance with the boiling point of the first solvent contained in the resin structure layer 10 and the second solvent contained in the electrode composite layer, and the thickness of the film to be formed.

FIG. 8 is a schematic diagram illustrating another example of a resin structure layer manufacturing apparatus (liquid discharge apparatus) for implementing the electrode manufacturing method of the present embodiment.

A liquid discharge device 300' controls a pump 310 and valves 311 and 312 to circulate the liquid composition in a liquid discharge head 306, a tank 307, and a tube 308.

The liquid discharge device 300' includes an external tank 313. When the amount of the liquid composition in the tank 307 decreases, the liquid discharge device 300' controls the pump 310, the valves 311 and 312, and a valve 314 to supply the first liquid composition from the external tank 313 to the tank 307.

By using the above-described resin structure layer manufacturing apparatus, the first liquid composition can be discharged to a targeted location of an object to which the first liquid composition is to be applied.

FIG. 9 is a schematic diagram illustrating another example of the method of manufacturing a resin structure layer of the present embodiment.

The method of manufacturing an electrode 210 in which a porous resin is provided on a base material includes a step of sequentially discharging a first liquid composition 12A onto a base material 211 by using the liquid discharge device 300'.

First, the base material 211 having an elongated shape is prepared. The base material 211 is wound around a cylindrical core and set on an unwinding roller 304 and a wind-up roller 305 so that a side on which a porous resin 212 is to be formed faces upward in FIG. 9. Here, the unwinding roller 304 and the wind-up roller 305 rotate counterclockwise to convey the base material 211 from right to left in FIG. 9. The liquid discharge head 306 disposed above the base material 211 between the unwinding roller 304 and the wind-up roller 305 discharges droplets of the first liquid composition 12A onto the base material 211 being sequentially conveyed, similarly to FIG. 8.

The liquid discharge head 306 may be provided as a plurality of liquid discharge heads 306 in a direction substantially parallel or substantially perpendicular to the conveyance direction of the base material 211. Next, the base material 211 onto which the droplets of the first liquid composition 12Aare discharged is conveyed to a polymerization portion 309 by the unwinding roller 304 and the wind-up roller 305. As a result, the porous resin 212 is formed, and the electrode 210 in which a porous resin is provided on a base material is obtained. Afterwards, the electrode 210 including a polyelectrolyte is cut into a desired size by punching or the like.

The polymerization portion 309 may be disposed either above or below the base material 211, or a plurality of polymerization portions 309 may be provided.

The polymerization portion 309 is not particularly limited, as long as the polymerization portion 309 does not directly contact the first liquid composition 12A. Examples of the polymerization portion 309 include, but are not limited to, a resistance heater, an infrared heater, and a fan heater in the case of thermal polymerization, and an ultraviolet irradiation device in the case of photopolymerization. Note that the polymerization portion 309 may include a plurality of polymerization portions 309.

The conditions for heating or light irradiation are not particularly limited and can be appropriately selected according to a purpose. In the polymerization, the first liquid composition 12A polymerizes to form a porous resin.

As illustrated in FIG. 10, a tank 307A may supply the liquid composition from a tank 313A connected to the tank 307A, and the liquid discharge head 306 may include a plurality of liquid discharge heads 306A and 306B. A liquid discharge apparatus illustrated in FIG. 10 is a modification of that illustrated in FIG. 8 and includes a liquid discharge apparatus 300A' and 300B'. The liquid discharge apparatus 300A' includes the liquid discharge head 306A, the tanks 307A and 313A, a pump 310A, valves 311A, 312A, 313A, and 314A, and a tube 308A. The liquid discharge apparatus 300B' includes the liquid discharge head 306B, tanks 307B and 313B, a pump 310B, valves 311B, 312B, 313B, and 314B, and a tube 308B.

[Embodiment for Forming Resin Structure Layer or Electrode by Indirect Application of Liquid Composition to Base Material]

FIGs. 11 and 12 are configuration diagrams illustrating an example of a printing portion in which an inkjet method and a transfer method are adopted as application unit in the resin structure layer manufacturing apparatus of the present embodiment. FIG. 11 is a configuration diagram illustrating a printing portion using a drum-shaped intermediate transfer body. FIG. 12 is a configuration diagram illustrating a printing portion using an endless belt-type intermediate transfer body.

A printing portion 400' illustrated in FIG. 11 is an inkjet printer that forms a porous resin on a base material by

transferring a liquid composition or a porous resin onto the base material via an intermediate transfer body 4001.

The printing portion 400' includes an inkjet portion 420, a transfer drum 4000, a preprocessing unit 4002, an absorption unit 4003, a heating unit 4004, and a cleaning unit 4005.

The inkjet portion 420 includes a head module 422 holding a plurality of heads 101. The heads 101 discharge a liquid composition onto the intermediate transfer body 4001 supported by the transfer drum 4000 to form a liquid composition layer on the intermediate transfer body 4001. Each of the heads 101 is a line head, and nozzles are arranged in a range covering the width of a recording area of a base material having a maximum usable size. The head 101 includes, on a lower surface thereof, a nozzle surface in which a nozzle is formed, and the nozzle surface faces the front surface of the intermediate transfer body 4001 with a small gap interposed therebetween. In the present embodiment, the intermediate transfer body 4001 is configured to circulate and move on a circular trajectory, and thus, the plurality of heads 101 are arranged radially.

The transfer drum 4000 faces an impression cylinder 621 and forms a transfer nip portion. For example, the preprocessing unit 4002 applies, onto the intermediate transfer body 4001, a reaction liquid to increase the viscosity of the liquid composition, before the heads 101 discharge the liquid composition. The absorption unit 4003 absorbs a liquid component from the liquid composition layer on the intermediate transfer body 4001 before transfer. The heating unit 4004 heats the liquid composition layer on the intermediate transfer body 4001 before transfer. When the liquid composition layer is heated, the liquid composition polymerizes by thermal polymerization to form a porous resin. Further, the solvent is removed to improve the transferability to the base material. The cleaning unit 4005 cleans the intermediate transfer body 4001 after transfer to remove foreign substances such as ink and dust remaining on the intermediate transfer body 4001.

The outer peripheral surface of the impression cylinder 621 is in pressure contact with the intermediate transfer body 4001, and when the base material passes through the transfer nip portion between the impression cylinder 621 and the intermediate transfer body 4001, the porous resin on the intermediate transfer body 4001 is transferred to the base material. Note that the impression cylinder 621 may be configured to include, on an outer circumferential surface thereof, at least one grip mechanism for holding a tip end portion of the base material.

A printing portion 400" illustrated in FIG. 12 is an inkjet printer that forms a porous resin on a base material by transferring a liquid composition and a porous resin onto the base material via an intermediate transfer belt 4006.

The printing portion 400" discharges droplets of the liquid composition from the plurality of heads 101 provided in the inkjet portion 420 to form a liquid composition layer on an outer circumferential surface of the intermediate transfer belt 4006. The liquid composition layer formed on the intermediate transfer belt 4006 is heated by a heating unit 4007 and polymerizes by thermal polymerization to form a porous resin, which forms a film on the intermediate transfer belt 4006.

The porous resin forming a film on the intermediate transfer belt 4006 is transferred to the base material in the transfer nip portion where the intermediate transfer belt 4006 faces a transfer roller 622. After the porous resin is transferred, the surface of the intermediate transfer belt 4006 is cleaned by a cleaning roller 4008.

The intermediate transfer belt 4006 is spanned over a drive roller 4009a, a counter roller 4009b, a plurality of (four in the present example) shape-maintaining rollers 4009c, 4009d, 4009e, and 4009f, and a plurality of (four in the present example) support rollers 4009g, and moves in the direction of the arrows in FIG. 12. The support rollers 4009g are provided to face the heads 101 and maintain the intermediate transfer belt 4006 in a tension state when ink droplets are discharged from the heads 101.

(Electrochemical Element)

An electrochemical element of the present embodiment is an electrochemical element including at least the electrode laminate body of the present embodiment described above, and further includes an exterior casing. Preferably, the electrochemical element is an all-solid-state battery including a solid electrolyte layer.

The exterior casing is not particularly limited, as long as the exterior casing can seal the electrode and an electrode structure body, and any known exterior casing can be appropriately selected according to a purpose.

FIG. 13 is a diagram illustrating an all-solid-state battery that forms the electrochemical element of the present embodiment.

In the all-solid-state battery illustrated in FIG. 13, a positive electrode 20 and a negative electrode 40 are laminated with a solid electrolyte 30 therebetween. Here, the positive electrode 20 is laminated on both sides of the negative electrode 40.

Further, a lead wire 50 is connected to a positive electrode base 21, and a lead wire 51 is connected to a negative electrode base 41.

The number of laminated layers of the positive electrode 20 and the negative electrode 40 is not particularly limited. The number of the positive electrodes 20 and the number of the negative electrodes 40 may be the same or may be different from each other.

The lead wires 50 and 51 are drawn out to the outside of an exterior casing 60.
The shape of the electrochemical element is not particularly limited, and examples thereof include a laminate type, a cylinder type, and a coin type.

(Method of Manufacturing Electrochemical Element and Electrochemical Element Manufacturing Apparatus)

A method of manufacturing an electrochemical element of the present embodiment includes an electrode manufacturing step of manufacturing an electrode laminate body by the above-described method of manufacturing an electrode laminate body of the present embodiment, and an element formation step of manufacturing an electrochemical element by using the electrode laminate body, and further includes other steps, if desired.
An electrochemical element manufacturing apparatus of the present embodiment includes an electrode manufacturing portion that manufactures an electrode laminate body by using the above-described electrode laminate body manufacturing apparatus of the present embodiment, and an element formation portion that manufactures an electrochemical element by using the electrode laminate body, and the electrochemical element manufacturing apparatus further includes other units, if desired.

<Electrode Manufacturing Step and Electrode Manufacturing Portion>

The electrode manufacturing step includes the application step, the polymerization step, the electrode composite layer forming step, the pressing step, and the solid electrolyte layer forming step described in the method of manufacturing the electrode laminate body according to the present embodiment described above, and further includes other unit such as an electrode processing step, if desired.
The electrode manufacturing portion includes the storage container, the application unit, the polymerization unit, the electrode composite layer forming unit, the pressing unit, and the solid electrolyte layer forming unit described in the electrode laminate body manufacturing apparatus according to the present embodiment described above, and further includes other unit such as an electrode processing unit, if desired.
By using the electrode manufacturing step and the electrode manufacturing portion, it is possible to manufacture an electrode including an electrode base, an electrode composite layer on the electrode base, a resin structure layer in an outer peripheral portion of the electrode composite layer, and a solid electrolyte layer on the electrode composite layer and the resin structure layer.

<Element Formation Step and Element Formation Portion>

The element formation step is a step of manufacturing an electrochemical element by using the electrode laminate body.
The element formation portion is a unit that manufactures an electrochemical element by using the electrode laminate body.
The method of manufacturing an electrochemical element by using an electrode laminate body is not particularly limited, and any known method of manufacturing an electrochemical element can be appropriately selected according to a purpose. Examples of the method include, but are not limited to, a method of forming a power storage element by using at least one process among installing a counter electrode, winding or laminating the counter electrode, and accommodating the counter electrode in a container.
Note that the element formation step may not include the entire process of forming the element, and may include a part of the steps of forming the element.

<Electrode Processing Step and Electrode Processing Portion>

An electrode processing portion is a unit used for processing an electrode on which a resin layer is formed and is arranged downstream of the application portion. The electrode processing portion may perform at least one of cutting, folding, and bonding. For example, a laminated electrode processing portion may be used to cut the laminated electrode on which the resin layer is formed to prepare a laminated body of the laminated electrode. By the electrode processing portion, it is possible to wind or laminate the laminated electrode on which the resin layer is formed.
The electrode processing portion includes, for example, an electrode processing device, and may cut, zig zag-fold, laminate, and wind the laminated electrode on which the porous resin layer is formed, in accordance with a targeted aspect of the battery.
The electrode processing step implemented by the electrode processing portion is, for example, a step of processing a laminated electrode on which a resin layer is formed, and is performed downstream of the application step. The electrode processing step may include at least one of a cutting step, a folding step, and a bonding step.

<Application of Electrochemical Element>

The applications of the electrochemical element are not particularly limited and examples thereof include moving bodies such as vehicles; and electrical devices such as smartphones, notebook computers, pen input computers, mobile computers, e-book players, mobile phones, mobile fax machines, mobile copiers, mobile printers, headphone stereos, video movies, LCD TVs, handy cleaners, portable CDs, mini discs, transceivers, electronic notebooks, electronic calculators, memory cards, mobile tape recorders, radios, backup power supplies, motors, lighting equipment, toys, game equipment, clocks, stroboscopes, and cameras. Among these applications, vehicles and electrical devices are particularly preferred.

Examples of the moving body include, but are not limited to, a standard vehicle, a special large vehicle, a special small vehicle, a truck, a large motorcycle, and a standard motorcycle.

[Moving Body]

FIG. 14 is a diagram illustrating a moving body equipped with an all-solid-state battery forming the electrochemical element of the present embodiment. For example, a moving body 70 is an electric vehicle. The moving body 70 includes a motor 71, an electrochemical element 72, and wheels 73 as an example of a moving unit. The electrochemical element 72 is the electrochemical element of the present embodiment described above. The electrochemical element 72 supplies electric power to the motor 71 to drive the motor 71. The motor 71 that is driven by the electrochemical element 72 can cause the wheels 73 to drive, and as a result, the moving body 70 can move.

According to the above-described configuration, it is possible to prevent a short circuit between the positive electrode and the negative electrode, and additionally, the moving body is driven by electric power from an electrochemical element having excellent battery characteristics, so that it is possible to safely and efficiently move the moving body.

The moving body 70 is not limited to the electric vehicle, but may be a PHEV, an HEV, or a locomotive and a motorcycle that can travel by using a combination of a diesel engine and an electrochemical element. Further, the moving body may be a transport robot used in a factory or the like, and may travel by using an electrochemical element or a combination of an engine and an electrochemical element. The moving body may be an object in which the object as a whole does not move, but only a part of the object moves, such as an assembly robot that is placed on a production line in a factory and can operate an arm or the like by using an electrochemical element or a combination of an engine and an electrochemical element.

EXAMPLES

The present invention will be described in more detail below with reference to examples, but the present invention is not limited to the examples described below.

<Synthesis of Solid Electrolyte 1>

A solid electrolyte 1 was synthesized as an argyrodite-type sulfide solid electrolyte $Li_6PS_5Cl$ (LPSC) in accordance with Document 1 "J. Power Sources. 2018, 396, 33-40".

A solid electrolyte coating was prepared as described below.

Octane (manufactured by Tokyo Chemical Industry Co., Ltd.) was used as a solvent. A solvent having a water content that was confirmed to be 100 ppm or less by using a Karl Fischer water densitometer, was used as a dehydrated solvent.

100 parts by mass of the solid electrolyte synthesized as described above and 1 part by mass of a dispersant (Solsperse™ 21000, manufactured by Lubrizol Corporation) were added to 100 parts by mass of the solvent and the mixture was mixed to obtain a solid electrolyte coating.

<Coating Surface of Active Material with Ion-Conductive Oxide>

A nickel-based positive electrode active material (lithium nickel cobalt manganese, may be referred to as "NCM1" hereinafter, average primary particle diameter 3.5 μm, manufactured by Toshima Manufacturing Co., Ltd.) was used as the positive electrode active material. $LiNbO_3$ was used as the ion-conductive oxide used to coat the surface of NCM1 particles. An alkoxide solution containing lithium and niobium was hydrolyzed on the surface of the NCM1 powder particles to form a $LiNbO_3$ layer, by referring to Document 2 "J. Mater. Chem. A. 2021, 9, 4117-4125". First, metallic lithium (manufactured by Honjo Metal Co., Ltd.) was dissolved in anhydrous ethanol (manufactured by Kanto Kagaku Co., Ltd.) to prepare an ethanol solution of lithium ethoxide. Further, niobium pentaethoxide ($Nb(OC_2H_5)_5$) (manufactured by Kojundo Chemical Laboratory Co., Ltd.) was added to the solution to obtain an alkoxide solution

containing lithium and niobium. A tumbling fluidizer device (MP-01, manufactured by Powrex Corp.) was used to obtain a fluidized bed of the NCM1 powder and the above-mentioned alkoxide solution was sprayed onto the powder to obtain a precursor powder in which the surface of the NCM1 powder particles was coated with the alkoxide. By heating the powder at 350°C in a dry air atmosphere, LNO/NCM1 having a $LiNbO_3$ layer formed on the surface of the NCM1 particles was synthesized.

<Method of Preparing Negative Electrode>

<Negative Electrode 1>

A lithium metal (manufactured by Honjo Metal Co., Ltd.) having an average thickness of 50 μm was bonded to a stainless steel foil base (50 mm x 50 mm, average thickness: 20 μm) as an electrode base, and further, an indium foil (manufactured by Nilaco Corp.) of 50 μm was bonded thereto to obtain a negative electrode 1 having a size of 22 mm x 22 mm.

<Negative Electrode 2>

45.5 mass% of graphite (Gr, manufactured by Sigma-Aldrich) as a negative electrode active material, 1.4 mass% of acetylene black (DENKA BLACK, manufactured by Denka Co., Ltd.) as a conductive material, 1.8 mass% of acrylonitrile butadiene rubber (NBR, manufactured by Sigma-Aldrich) as a binder, and 14.8 mass% of the solid electrolyte 1 were dispersed in 36.5 mass% of anisole to prepare a negative electrode coating 2.
After applying the negative electrode coating 2 to both sides of a stainless steel foil base (50 mm x 50 mm, average thickness: 20 μm), the foil base was dried to obtain a negative electrode 2 having a size of 25 mm x 25 mm.
The average thickness of the negative electrode 2 was 61 μm, and the battery capacity per unit area was 3.38 $mAh/cm^2$.

<Negative Electrode 3>

45.5 mass% of silicon (Si, manufactured by Sigma-Aldrich) as a negative electrode active material, 1.4 mass% of acetylene black (DENKA BLACK, manufactured by Denka Co., Ltd.) as a conductive material, 1.8 mass% of acrylonitrile butadiene rubber (NBR, manufactured by Sigma-Aldrich) as a binder, and 14.8 mass% of the solid electrolyte 1 were dispersed in 36.5 mass% of anisole to prepare a negative electrode coating 3.
After applying the negative electrode coating 3 to both sides of a stainless steel foil base, the foil base was dried to obtain a negative electrode 3 having a size of 25 mm x 25 mm.
The average thickness of the negative electrode 3 was 21 μm, and the battery capacity per unit area was 3.61 $mAh/cm^2$.

<Preparation of First Liquid Composition for Forming Resin Structure Layer>

A first liquid composition for forming an insulating layer was prepared by mixing materials in the ratios indicated below.

<First Liquid Composition 1>

49.5 mass% of tetrahydrolinalool (manufactured by Tokyo Chemical Industry Co., Ltd.) as a solvent, 50.0 mass% of polyethylene glycol (200) diacrylate (manufactured by Daicel-Allnex Ltd.) as a polymerizable compound, and 0.5 mass% of bis(2,4,6-trimethylbenzoyl)phenyl phosphate (manufactured by IGM Resins B.V) as a polymerization initiator were mixed in this ratio to obtain a first liquid composition 1 for forming a resin structure layer.

<First Liquid Composition 2>

49.5 mass% of cyclohexanone (manufactured by Kanto Chemical Industry Co., Ltd) as a solvent, 50.0 mass% of polyethylene glycol (200) diacrylate (manufactured by Daicel-Allnex Ltd.) as a polymerizable compound, and 0.5 mass% of bis(2,4,6-trimethylbenzoyl)phenyl phosphate as a polymerization initiator were mixed in this ratio to obtain a first liquid composition 2.

<Preparation of Second Liquid Composition for Forming Positive Electrode Composite Layer>

45.3 mass% of LNO/NMC1 as a positive electrode active material, 2.2 mass% of acetylene black (DENKA BLACK, manufactured by Denka Co., Ltd.) as a conductive material, 1.4 mass% of polybutyl methacrylate (PBMA, manufactured by Aldrich) as a binder, and 14.7 mass% of the solid electrolyte 1 were dispersed in 36.4 mass% of anisole (manufactured by Tokyo Chemical Industry Co., Ltd.) to prepare a second liquid composition 1 for forming a positive electrode composite layer.

(Example 1)

<Preparation of Positive Electrode>

The first liquid composition 1 for forming a resin structure layer was filled into an inkjet discharge device including an inkjet head (MH5421F, manufactured by Ricoh Industry Co., Ltd.). An aluminum foil base (50 mm x 50 mm, average thickness: 15 μm) was arranged on a stage, and the first liquid composition 1 was discharged and applied to the aluminum foil base so that an outer diameter was 40 mm x 40 mm, the width of the resin structure layer was 10 mm, and an opening portion having a size of 20 mm x 20 mm was formed therein from which the current collector was exposed.

Immediately afterwards, the coated area was irradiated with UV light (light source: UV-LED (manufactured by Phoseon, product name: FJ800), wavelength: 365 nm, irradiation intensity: 30 mW/cm$^2$, irradiation time: 20 s) in a nitrogen atmosphere to cure the first liquid composition 1.

Subsequently, an inkjet discharge device including a GEN5 head (manufactured by Ricoh Printing Systems Co., Ltd.) was used to discharge and apply the second liquid composition 1 to fill the inside of the opening portion having a size of 20 mm x 20 mm.

Next, a hot plate was used to heat the base material at 120°C for 1 minute to remove the solvent and obtain an electrode 1 including a positive electrode composite layer and a resin structure layer on the electrode base (see FIGs. 1B and 6).

In the obtained electrode 1, the size of the surface of the positive electrode layer was 21 mm x 21 mm, and the amount of warpage of the base material was 0 mm. The average thickness of the resin structure layer and the average thickness of the positive electrode layer were measured by using a laser microscope (Keyence Corporation, VKX-3000), and both values were 95 μm. The positive electrode contacted and covered an end portion of the resin structure layer until a topmost part, and the positive electrode composite layer and the resin structure layer were continuously formed. The battery capacity per unit area was 2.91 mAh/cm$^2$.

[Warpage Evaluation Method]

The electrode base of the obtained electrode was placed on a horizontal surface to measure the maximum value of the height (mm) of the warpage elevation at an end portion of the electrode base as "warpage" and the warpage was evaluated based on the following evaluation criteria.

- Evaluation Criteria -

Excellent: Warpage of 0 mm to 1 mm, very good characteristics with no warpage
Good: Warpage of 1 mm to 3 mm, good characteristics with little warpage
Marginal: Warpage of 3 mm to 5 mm, some warpage, but no problem in practical use
Poor: Warpage of 5 mm or more, large warpage and problems in practical use

<Preparation of Battery>

The electrode 1 of Example 1 was sealed with an aluminum laminate and then pressurized at 500 MPa for 5 minutes by using cold isostatic pressing (CIP). After the pressurization, the electrode 1 was removed from the aluminum laminate.

A solid electrolyte layer was formed by coating the positive electrode by using a bar coating method to obtain an electrode laminate body (see FIG. 2). After the coating, the electrode laminate body was sealed again with an aluminum laminate and pressurized by using CIP at 500 MPa for 5 minutes. The electrode 1 and the negative electrode 1 were arranged to face each other to form a single cell layer (see FIG. 3). Lead wires were attached to each of the electrode 1 and the negative electrode 1, and then, the single cell layer was vacuum-sealed with a laminate to prepare

an all-solid-state battery 1 of Example 1.

The battery voltage of the prepared all-solid-state battery 1 was measured according to the following procedure and the battery voltage was 2.08 V Subsequently, it was possible to charge the capacity per unit area without any problem with a constant current up to 3.6 V at a current value corresponding to 20% of the capacity per unit area calculated from the theoretical capacity of the positive electrode active material, and no short circuit was observed.

[Method of Measuring Capacity per Unit Area of Electrode]

The capacity per unit area of the electrode was measured by using a charge-discharge test device (TOSCAT-3001, manufactured by Toyo System Co., Ltd.) according to the following procedure.

First, a round shape having a diameter of 10 mm was punched out from the prepared electrode.

Next, the capacity of the electrode containing a solid electrolyte as the positive electrode was evaluated using the method described below.

The positive electrode was punched out in an argon atmosphere to obtain a capacity per unit area of an electrode having a round shape of a diameter of 10 mm.

80 mg of the solid electrolyte 1 were filled into a polyethylene terephthalate (PET) tube of a bipolar cell (manufactured by Hohsen Corp.), a press pin was placed onto the tube, and a uniaxial press machine (P-6, manufactured by Riken Seiki Co., Ltd.) was used to mold the solid electrolyte 1 for 1 minute at an indicated pressure of 10 MPa.

Next, the positive electrode punched out to a diameter of 10 mm was placed so that the surface of the positive electrode composite layer contacted the surface of the solid electrolyte in the PET tube, a press pin was placed thereon, and a uniaxial press machine (P-6, Riken Seiki Co., Ltd.) was used to mold the positive electrode composite layer for 1 minute at an indicated pressure of 30 MPa.

On the opposite side from the side where the positive electrode composite layer was pressed, indium (manufactured by Nilaco Corp.) having an average thickness of 50 μm was layered on a SUS foil of 10 μm to which lithium having an average thickness of 50 μm (manufactured by Honjo Metal Co., Ltd.) was bonded. The obtained product was molded for 3 seconds at an indicated pressure of 12 MPa by using a uniaxial press machine (P-6, manufactured by Riken Seiki Co., Ltd.). The PET tube onto which the press pin was placed was inserted into a bipolar cell, and the bipolar cell was hermetically sealed at an indicated pressure of 25 N·m by using a digital torque ratchet (KTC Tool Co., Ltd.).

This electrochemical element was charged at a constant current of 3.6 V at room temperature (25°C) with a current value corresponding to 20% of the capacity per unit area calculated from the theoretical capacity of the positive electrode active material, and then, discharged at a constant current to 2.4 V to perform initial charging and discharging. The charging and discharging process was performed twice, and the discharge capacity in the second process was measured as the capacity per unit area of the initial positive electrode.

Similarly, the negative electrode was charged and discharged in a range from -0.55 V to 1.4 V at a current value corresponding to 20% of the capacity per unit area calculated from the theoretical capacity of the negative electrode active material, and the capacity of the negative electrode per unit area was calculated.

(Example 2)

<Preparation of Positive Electrode>

The first liquid composition 1 for forming a resin layer and the second liquid composition 1 for forming a positive electrode composite layer were each filled into a separate inkjet discharge device including a GEN5 head (manufactured by Ricoh Printing Systems Co., Ltd.). An aluminum foil base (50 mm x 50 mm, average thickness: 15 μm) as a current collector was arranged on a stage, and the first liquid composition 1 was discharged and applied to the aluminum foil base to obtain a shape having an outer diameter of 40 mm x 40 mm, a width of the resin structure layer of 10 mm, and an opening portion therein having a size of 20 mm x 20 mm from which the current collector was exposed, and a positive electrode coating was discharged and applied to an area of 20 mm x 20 mm of the shape.

Immediately afterwards, the coated area was irradiated with UV light (light source: UV-LED (manufactured by Phoseon, product name: FJ800), wavelength: 365 nm, irradiation intensity: 30 mW/cm$^2$, irradiation time: 20 s) in a nitrogen atmosphere to cure the first liquid composition 1.

Next, a hot plate was used to heat the base material at 120°C for 1 minute to remove the solvent and obtain an electrode 2 including a positive electrode composite layer and a resin structure layer on the electrode base (see FIGs. 1B and 6).

In the obtained electrode 2, the size of the surface of the positive electrode layer was 20.5 mm x 20.5 mm, and the amount of warpage of the base material was 0 mm. The average thickness of the resin structure layer and the average thickness of the positive electrode layer were measured by using a laser microscope (Keyence Corporation, VKX-3000), and both values were 95 μm. The positive electrode contacted and covered an end portion of the resin

structure layer until a topmost part, and the positive electrode composite layer and the resin structure layer were continuously formed. The battery capacity per unit area was 2.91 $mAh/cm^2$.

<Preparation of Battery>

An all-solid-state battery 2 of Example 2 was prepared similarly to Example 1, except that the electrode 2 was used instead of the electrode 1 in Example 1.

The battery voltage of the prepared all-solid-state battery 2 was measured and the battery voltage was 2.07 V Subsequently, it was possible to charge the capacity per unit area without any problem with a constant current up to 3.6 V at a current value corresponding to 20% of the capacity per unit area calculated from the theoretical capacity of the positive electrode active material, and no short circuit was observed.

(Example 3)

<Preparation of Positive Electrode>

The first liquid composition 1 for forming a resin layer was filled into an inkjet discharge device including a GEN5 head (manufactured by Ricoh Printing Systems Co., Ltd.). An aluminum foil base (50 mm x 50 mm, average thickness: 15 μm) as a current collector was arranged on a stage, and the first liquid composition 1 was discharged and applied to obtain a shape having an outer diameter of 40 mm x 40 mm, a width of the resin structure layer of 10 mm, and an opening portion therein having a size of 20 mm x 20 mm from which the current collector was exposed, and a positive electrode coating was discharged and applied to an area of 20 mm x 20 mm of the shape.

Immediately afterwards, the coated area was irradiated with UV light (light source: UV-LED (manufactured by Phoseon, product name: FJ800), wavelength: 365 nm, irradiation intensity: 30 $mW/cm^2$, irradiation time: 20 s) in a nitrogen atmosphere to cure the first liquid composition 2.

Subsequently, an inkjet discharge device including a GEN5 head (manufactured by Ricoh Printing Systems Co., Ltd.) was used to discharge and apply the second liquid composition 1 to fill the inside of the opening portion having a size of 20 mm x 20 mm.

Next, a hot plate was used to heat the base material at 120°C for 1 minute to remove the solvent and obtain an electrode 3 including a positive electrode composite layer and a resin structure layer on the electrode base (see FIGs. 1B and 6).

In the obtained electrode 3, the size of the surface of the positive electrode layer was 21 mm x 21 mm, and the amount of warpage of the base material was 1 mm. The average thickness of the resin structure layer was measured by using a laser microscope (Keyence Corporation, VKX-3000), and was 110 μm. At this time, the positive electrode contacted and covered an end portion of the resin structure layer up to a height of 97 μm, and the positive electrode composite layer and the resin structure layer were continuously formed. The battery capacity per unit area was 2.91 $mAh/cm^2$.

<Preparation of Battery>

An all-solid-state battery 3 of Example 3 was prepared similarly to Example 1, except that the electrode 3 was used instead of the electrode 1 in Example 1.

The battery voltage of the prepared all-solid-state battery 3 was measured and was 2.08 V Subsequently, it was possible to charge the capacity per unit area without any problem with a constant current up to 3.6 V at a current value corresponding to 20% of the capacity per unit area calculated from the theoretical capacity of the positive electrode active material, and no short circuit was observed.

(Example 4)

<Preparation of Positive Electrode>

The first liquid composition 2 for forming a resin layer was filled into an inkjet discharge device including a GEN5 head (manufactured by Ricoh Printing Systems Co., Ltd.). An aluminum foil base (50 mm x 50 mm, average thickness: 15 μm) as a current collector was arranged on a stage, and the first liquid composition 2 was discharged and applied to the aluminum foil base to obtain a shape having an outer diameter of 40 mm x 40 mm, a width of the resin structure layer of 10 mm, and an opening portion therein having a size of 20 mm x 20 mm from which the current collector was exposed, and a positive electrode coating was discharged and applied to an area of 20 mm x 20 mm of the shape.

Immediately afterwards, the coated area was irradiated with UV light (light source: UV-LED (manufactured by

Phoseon, product name: FJ800), wavelength: 365 nm, irradiation intensity: 30 mW/cm$^2$, irradiation time: 20 s) in a nitrogen atmosphere to cure the first liquid composition 2.

Subsequently, an inkjet discharge device including a GEN5 head (manufactured by Ricoh Printing Systems Co., Ltd.) was used to discharge and apply the second liquid composition 1 to fill the inside of the opening portion having a size of 20 mm x 20 mm.

Next, a hot plate was used to heat the base material at 120°C for 1 minute to remove the solvent and obtain an electrode 4 including a positive electrode composite layer and a resin structure layer on the electrode base (see FIGs. 1B and 6).

In the obtained electrode 4, the size of the surface of the positive electrode layer was 21 mm x 21 mm, and the amount of warpage of the base material was 3 mm. The average thickness of the resin structure layer and the average thickness of the positive electrode layer were measured by using a laser microscope (Keyence Corporation, VKX-3000), and both values were 95 μm. The positive electrode contacted and covered an end portion of the resin structure layer until a topmost part, and the positive electrode composite layer and the resin structure layer were continuously formed. The battery capacity per unit area was 2.91 mAh/cm$^2$.

<Preparation of Battery>

An all-solid-state battery 4 of Example 4 was prepared similarly to Example 1, except that the electrode 4 was used instead of the electrode 1 in Example 1.

The battery voltage of the prepared all-solid-state battery 4 was measured and was 2.01 V Subsequently, it was possible to charge the capacity per unit area without any problem with a constant current up to 3.6 V at a current value corresponding to 20% of the capacity per unit area calculated from the theoretical capacity of the positive electrode active material, and no short circuit was observed.

(Comparative Example 1)

The first liquid composition 2 for forming a resin layer was filled into an inkjet discharge device including a GEN5 head (manufactured by Ricoh Printing Systems Co., Ltd.). An aluminum foil base (50 mm x 50 mm, average thickness: 15 μm) as a current collector was arranged on a stage, and the first liquid composition 2 was discharged and applied to the aluminum foil base to obtain a shape having an outer diameter of 40 mm x 40 mm, a width of the resin structure layer of 10 mm, and an opening portion therein having a size of 20 mm x 20 mm from which the current collector was exposed, and a positive electrode coating was discharged and applied to an area of 20 mm x 20 mm of the shape.

Immediately afterwards, the coated area was irradiated with UV light (light source: UV-LED (manufactured by Phoseon, product name: FJ800), wavelength: 365 nm, irradiation intensity: 30 mW/cm$^2$, irradiation time: 20 s) in a nitrogen atmosphere to cure the first liquid composition 2. Next, a hot plate was used to heat the base material at 120°C for 1 minute to remove the solvent.

Subsequently, an inkjet discharge device including a GEN5 head (manufactured by Ricoh Printing Systems Co., Ltd.) was used to discharge and apply the second liquid composition 1 to fill the inside of the opening portion having a size of 20 mm x 20 mm.

Next, a hot plate was used to heat the base material at 120°C for 1 minute to remove the solvent and obtain an electrode a including a positive electrode composite layer and a resin structure layer on the electrode base.

In the obtained electrode a, the size of the surface of the positive electrode layer was 21 mm x 21 mm, and the amount of warpage of the base material was 5 mm. The average thickness of the resin structure layer and the average thickness of the positive electrode layer were measured by using a laser microscope (Keyence Corporation, VKX-3000), and both values were 97 μm. The positive electrode contacted and covered an end portion of the resin structure layer until a topmost part, and the positive electrode composite layer and the resin structure layer were continuously formed. The battery capacity per unit area was 2.91 mAh/cm$^2$.

Table 1

| | Positive electrode composite layer Thickness [mm] | Resin insulating layer Thickness [mm] | Warpage [mm] |
|---|---|---|---|
| Example 1 | 97 | 97 | 0 |
| Example 2 | 98 | 98 | 0 |
| Example 3 | 97 | 110 | 1 |
| Example 4 | 97 | 97 | 3 |

(continued)

| | Positive electrode composite layer Thickness [mm] | Resin insulating layer Thickness [mm] | Warpage [mm] |
|---|---|---|---|
| Comparative Example 1 | 97 | 97 | 5 |

Aspects of the present invention include, for example, the following.

According to a first aspect, a method of manufacturing an electrode includes:

applying a first liquid composition including a polymerizable compound and a first solvent onto an electrode base to form a first liquid composition layer,
polymerizing the polymerizable compound to form a resin structure layer,
applying a second liquid composition including an active material and a second solvent onto the electrode base to form a second liquid composition layer, and
removing the first solvent and the second solvent.

According to a second aspect, in the method according to the first aspect, the applying the first liquid composition, the polymerizing, and the applying the second liquid composition are implemented in this order, and
the applying the second liquid composition includes applying the second liquid composition to a location adjacent to the resin structure layer on the electrode base.

According to a third aspect, in the method according to the first aspect, the polymerizing is implemented after the applying the first liquid composition and the applying the second liquid composition are implemented simultaneously or sequentially, and
the first liquid composition and the second liquid composition are applied to locations adjacent to each other.

According to a fourth aspect, in the method according to any one of the first aspect to the third aspect, the polymerizing includes photopolymerizing by light irradiation.

According to a fifth aspect, in the method according to any one of the first aspect to the fourth aspect, the resin structure layer is porous.

According to a sixth aspect, in the method according to the fifth aspect, the resin structure layer has pores of 0.01 μm or more and 10 μm or less, and
the first solvent has a viscosity of 1 mPa·s or more and 150 mPa·s or less at 25°C.

According to a seventh aspect, in the method according to any one of the first aspect to the sixth aspect, the first solvent and the second solvent are different from each other.

According to an eighth aspect, an electrode includes:

an electrode base,
an electrode composite layer on the electrode base, and
a resin structure layer in an adjacent portion of the electrode composite layer, the resin structure layer formed by polymerizing a liquid composition including a polymerizable compound and a first solvent,
the electrode composite layer contacts and continues from an end surface of the resin structure layer, and covers an end portion of the resin structure layer contacting the electrode base,
an area of a surface of the electrode composite layer not contacting the electrode base is equal to or larger than an area of a surface of the electrode composite layer contacting the electrode base, and
a ratio (B/A) of an average thickness B of the resin structure layer to an average thickness A of the electrode composite layer is 0.97 or more and 1.03 or less.

According to a ninth aspect, an electrode manufacturing apparatus includes:

a first storage container storing a first liquid composition including a polymerizable compound and a first solvent,
a second storage container storing a second liquid composition including an active material and a second solvent,
a first application unit to apply the first liquid composition on an electrode base to form a first liquid composition layer;
a polymerization unit to polymerize the polymerizable compound to form a resin structure layer;
a second application unit to apply the second liquid composition on an electrode base to form a second liquid composition layer, and
a removal unit to remove the first solvent and the second solvent.

According to a tenth aspect, a method of manufacturing an electrochemical element includes:

manufacturing an electrode by the method according to any one of the first aspect to the seventh aspect, and manufacturing an electrochemical element by using the electrode.

According to an eleventh aspect, an electrochemical element manufacturing apparatus includes:

an electrode manufacturing unit to manufacture an electrode by using the electrode manufacturing apparatus according to the ninth aspect, and
an element formation unit to manufacture an electrochemical element by using the electrode.

According to the method of manufacturing an electrode according to any one of the first aspect to the seventh aspect, the electrode according to the eighth aspect, the electrode manufacturing apparatus according to the ninth aspect, the method of manufacturing an electrochemical element according to the tenth aspect, and the electrochemical element manufacturing apparatus according to the eleventh aspect, it is possible to solve the above-described conventional problems and achieve the object of the present invention.
Any one of the above-described operations may be performed in various other ways, for example, in an order different from the one described above.

## Claims

**1.** A method of manufacturing an electrode, the method comprising:

applying a first liquid composition including a polymerizable compound and a first solvent onto an electrode base to form a first liquid composition layer;
polymerizing the polymerizable compound to form a resin structure layer;
applying a second liquid composition including an active material and a second solvent onto the electrode base to form a second liquid composition layer; and
removing the first solvent and the second solvent.

**2.** The method according to claim 1, wherein

the applying the first liquid composition, the polymerizing, and the applying the second liquid composition are implemented in this order, and
the applying the second liquid composition includes:
applying the second liquid composition to a location adjacent to the resin structure layer on the electrode base.

**3.** The method according to claim 1, wherein

the polymerizing is implemented after the applying the first liquid composition and the applying the second liquid composition are implemented simultaneously or sequentially, and
the first liquid composition and the second liquid composition are applied to locations adjacent to each other.

**4.** The method according to any one of claims 1 to 3, wherein the polymerizing includes photopolymerizing by light irradiation.

**5.** The method according to any one of claims 1 to 4, wherein the resin structure layer is porous.

**6.** The method according to claim 5, wherein

the resin structure layer has pores of 0.01 μm or more and 10 μm or less, and
the first solvent has a viscosity of 1 mPa·s or more and 150 mPa·s or less at 25°C.

**7.** The method according to any one of claims 1 to 6, wherein the first solvent and the second solvent are different from each other.

**8.** An electrode (25), comprising:

an electrode base (21);
an electrode composite layer (20) on the electrode base (21); and
a resin structure layer (10) in an adjacent portion of the electrode composite layer (20), the resin structure layer (10) formed by polymerizing a liquid composition including a polymerizable compound and a first solvent, wherein the electrode composite layer (20) contacts and continues from an end surface of the resin structure layer (10), and covers an end portion of the resin structure layer (10) contacting the electrode base (21),
an area of a surface of the electrode composite layer (20) not contacting the electrode base (21) is equal to or larger than an area of a surface of the electrode composite layer (20) contacting the electrode base (21), and
a ratio (B/A) of an average thickness B of the resin structure layer (10) to an average thickness A of the electrode composite layer (20) is 0.97 or more and 1.03 or less.

**9.** An electrode manufacturing apparatus (500) comprising:

a first storage container (1b) storing a first liquid composition (7) including a polymerizable compound and a first solvent;
a second storage container (2b) storing a second liquid composition (8) including an active material and a second solvent;
a first application unit (1a) to apply the first liquid composition (7) on an electrode base (4) to form a first liquid composition layer;
a polymerization unit (3a) to polymerize the polymerizable compound to form a resin structure layer;
a second application unit (2a) to apply the second liquid composition (8) on the electrode base (4) to form a second liquid composition layer; and
a removal unit (4a) to remove the first solvent and the second solvent.

**10.** A method of manufacturing an electrochemical element, the method comprising:

manufacturing an electrode by the method according to any one of claims 1 to 7; and
manufacturing an electrochemical element by using the electrode.

**11.** An electrochemical element manufacturing apparatus comprising:

an electrode manufacturing unit to manufacture an electrode by using the electrode manufacturing apparatus (500) according to claim 9; and
an element formation unit to manufacture an electrochemical element by using the electrode.

FIG. 1A

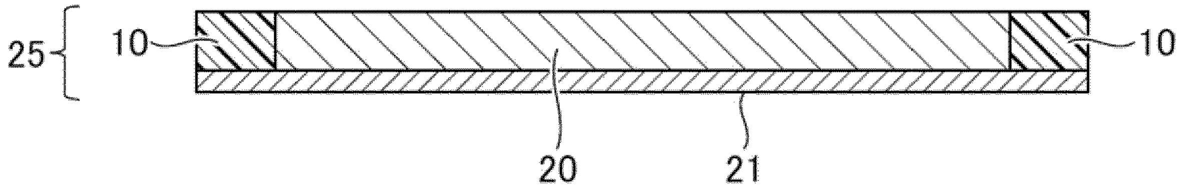


FIG. 1B

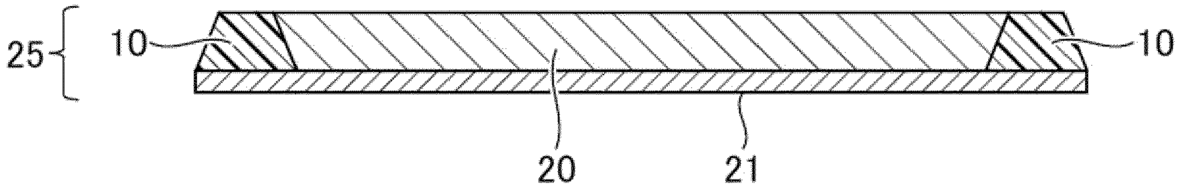


FIG. 2

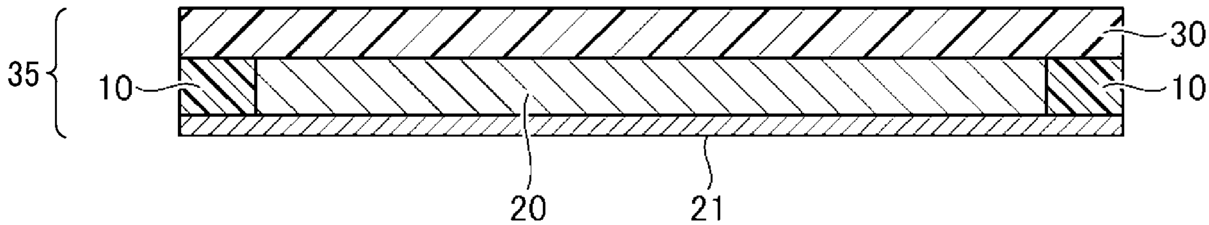


FIG. 3

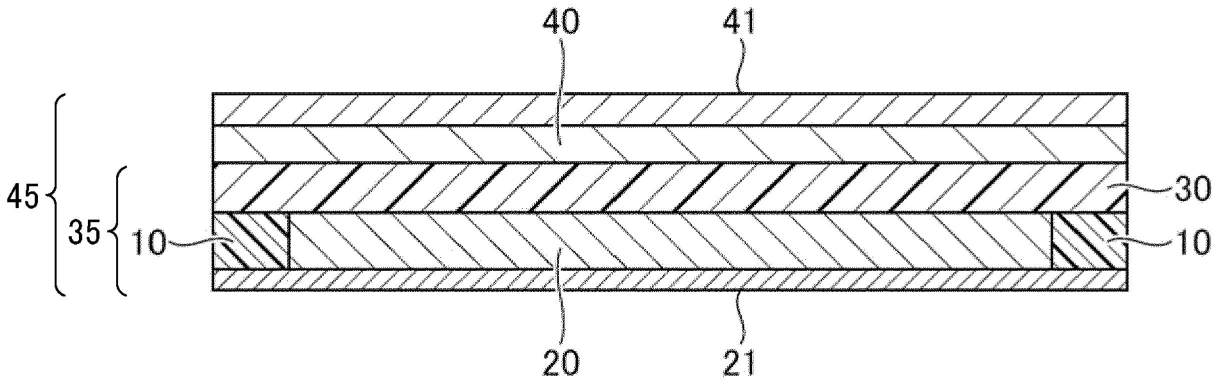

FIG. 4

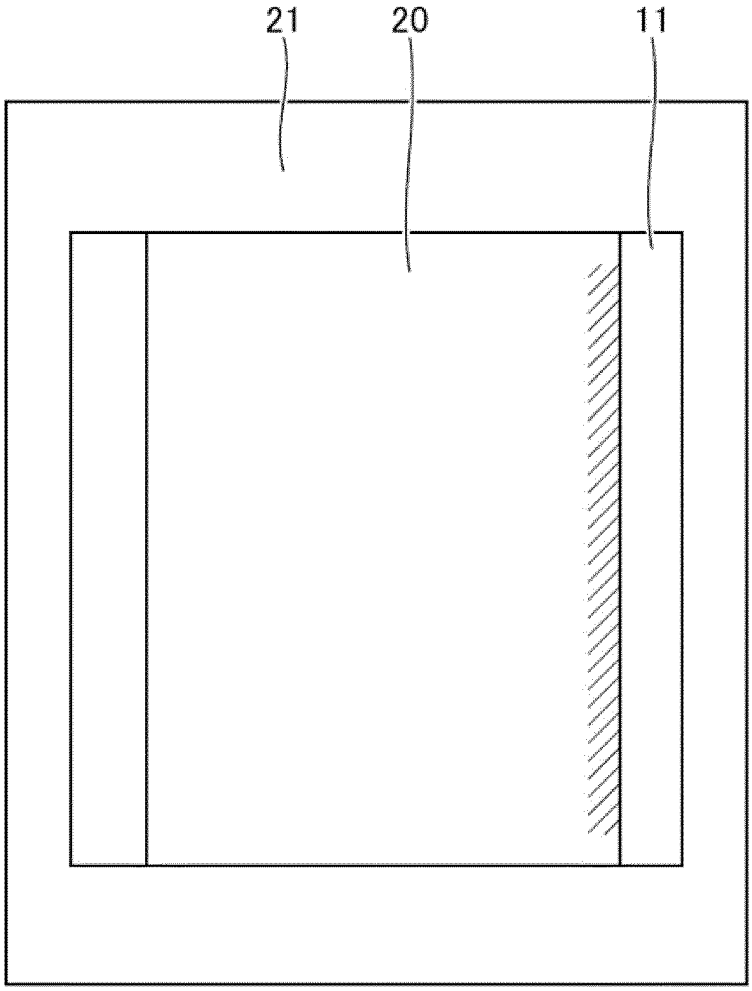

FIG. 5

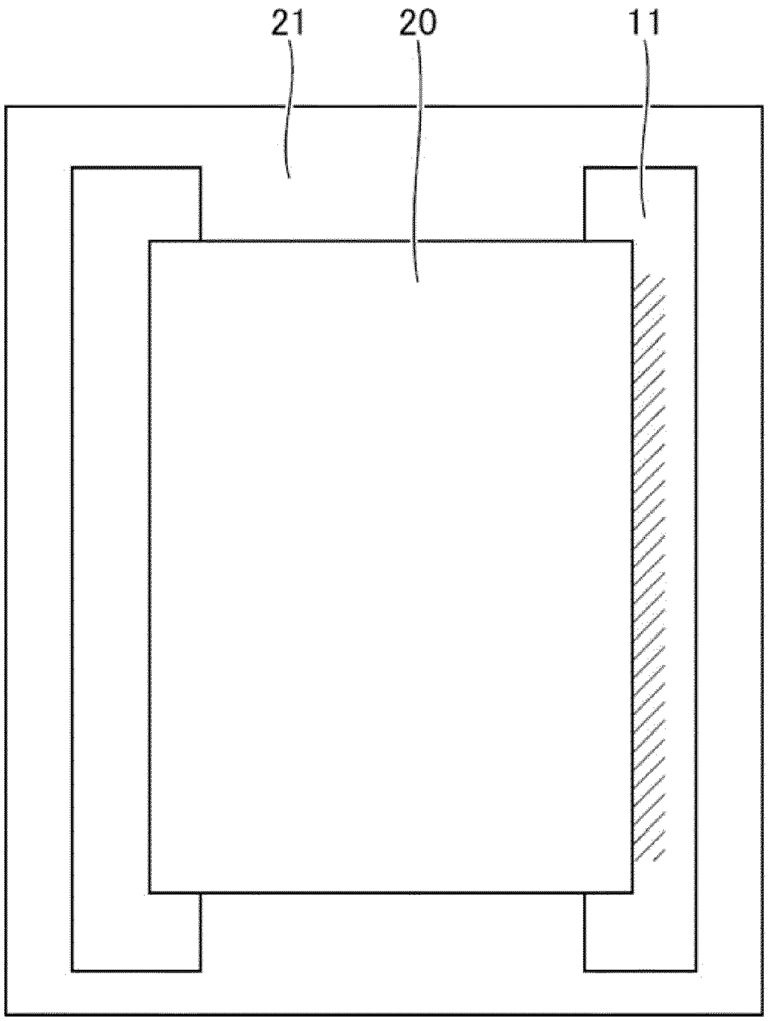

FIG. 6

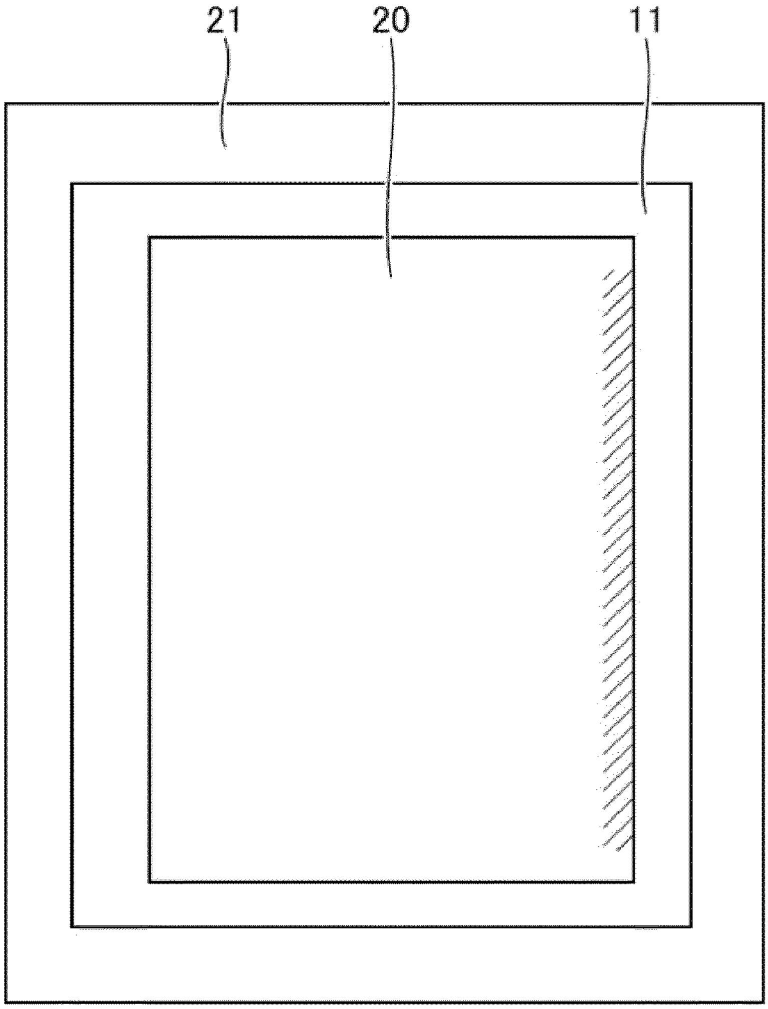

FIG. 7A

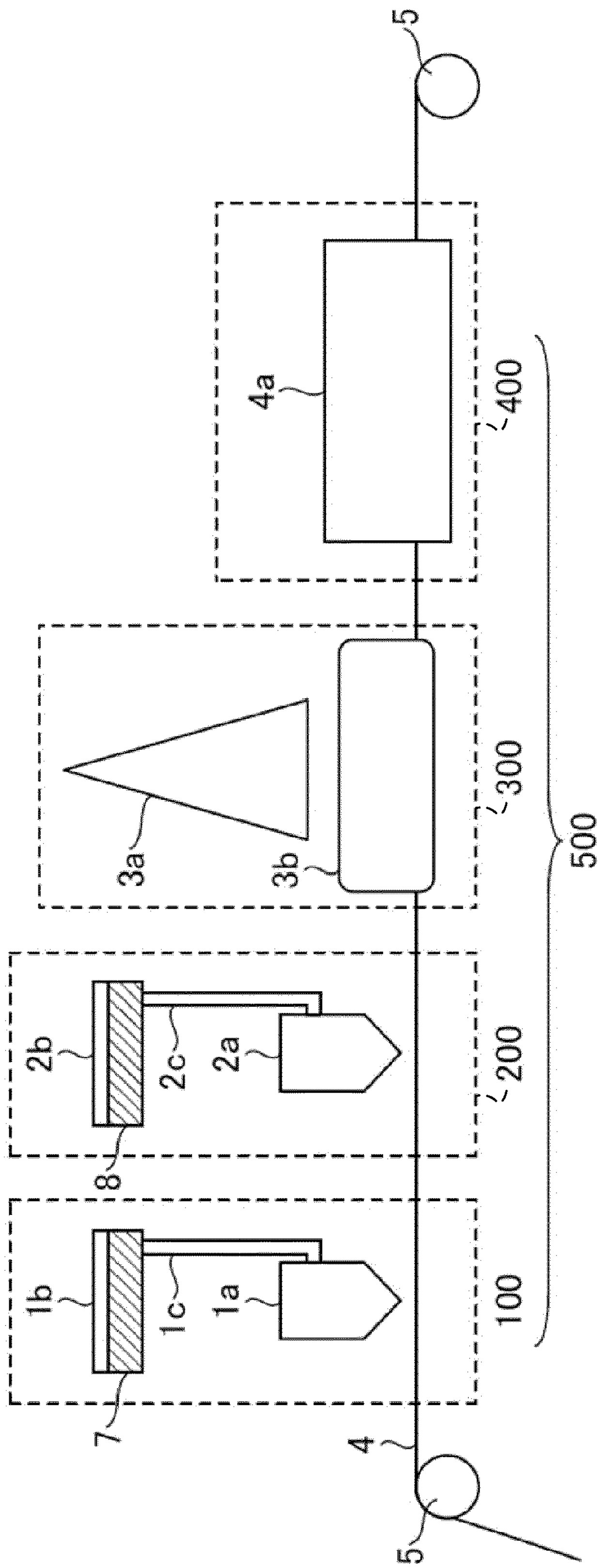

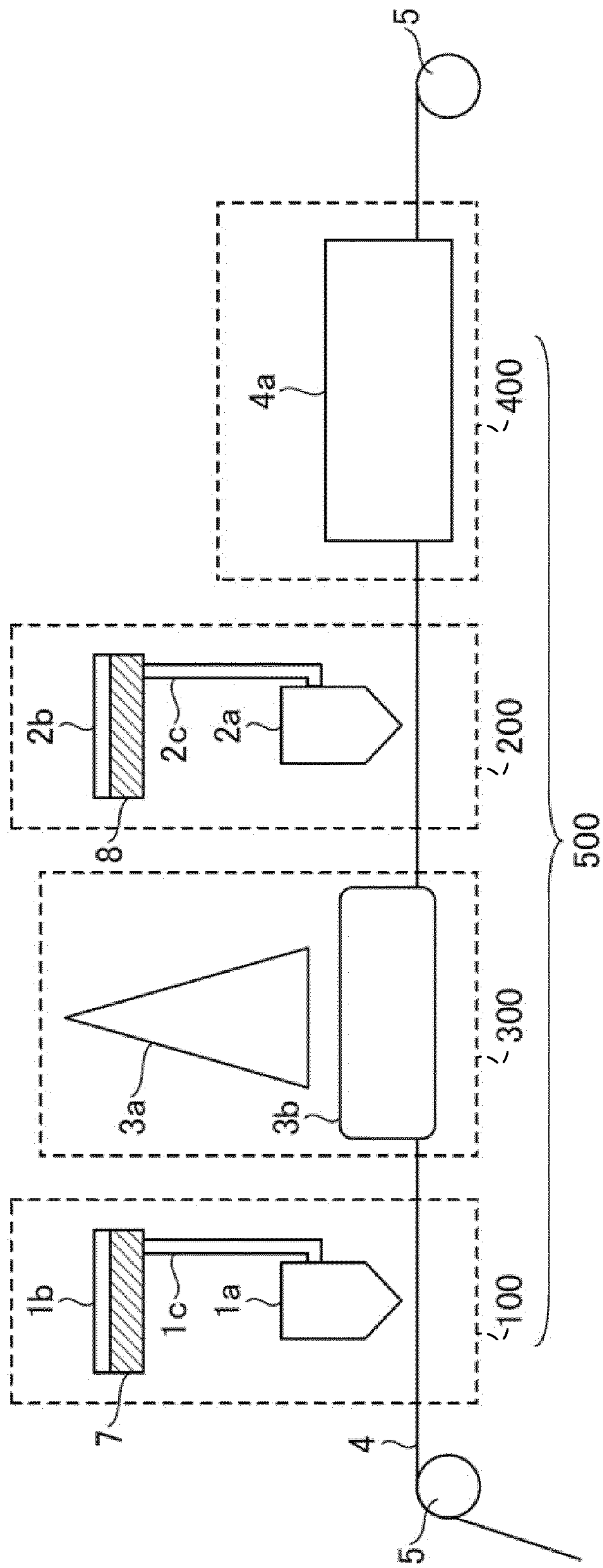


FIG. 7B

FIG. 8

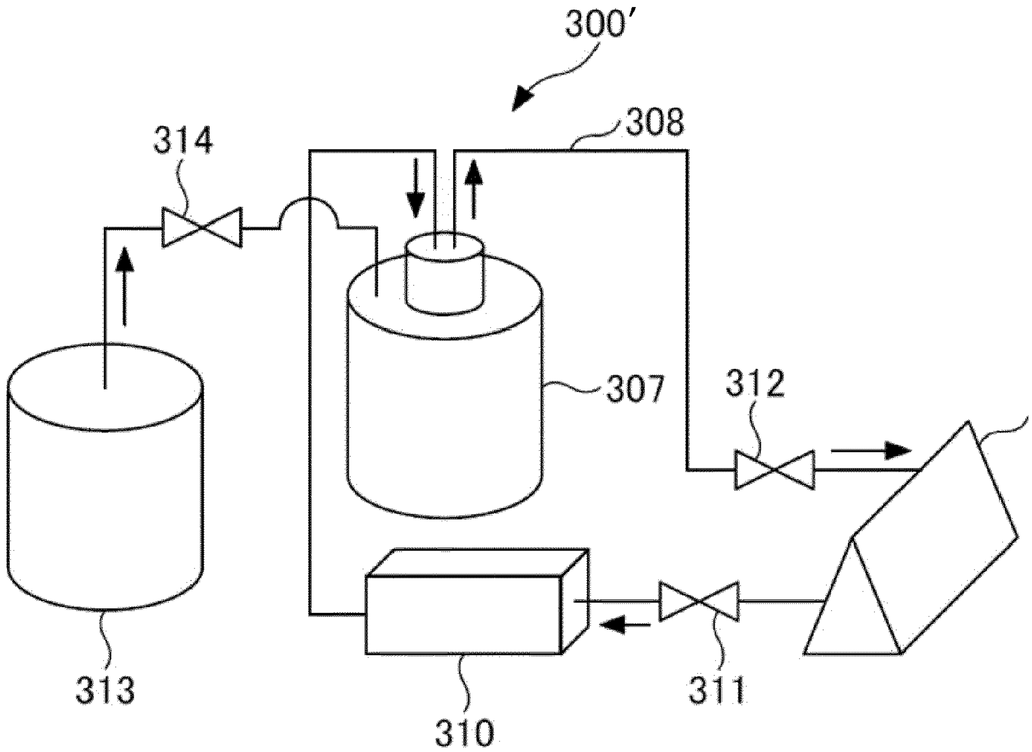

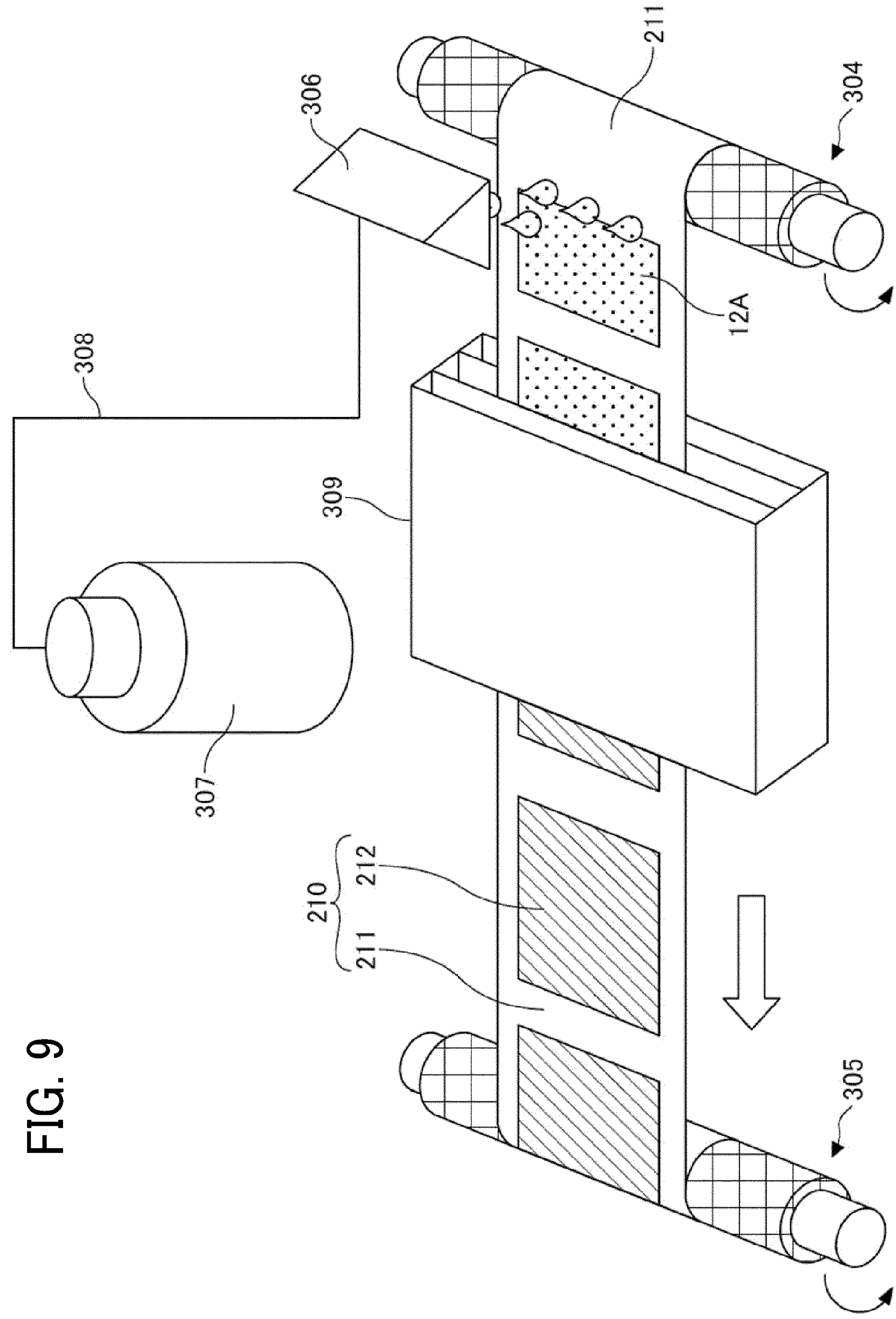


FIG. 9

FIG. 10

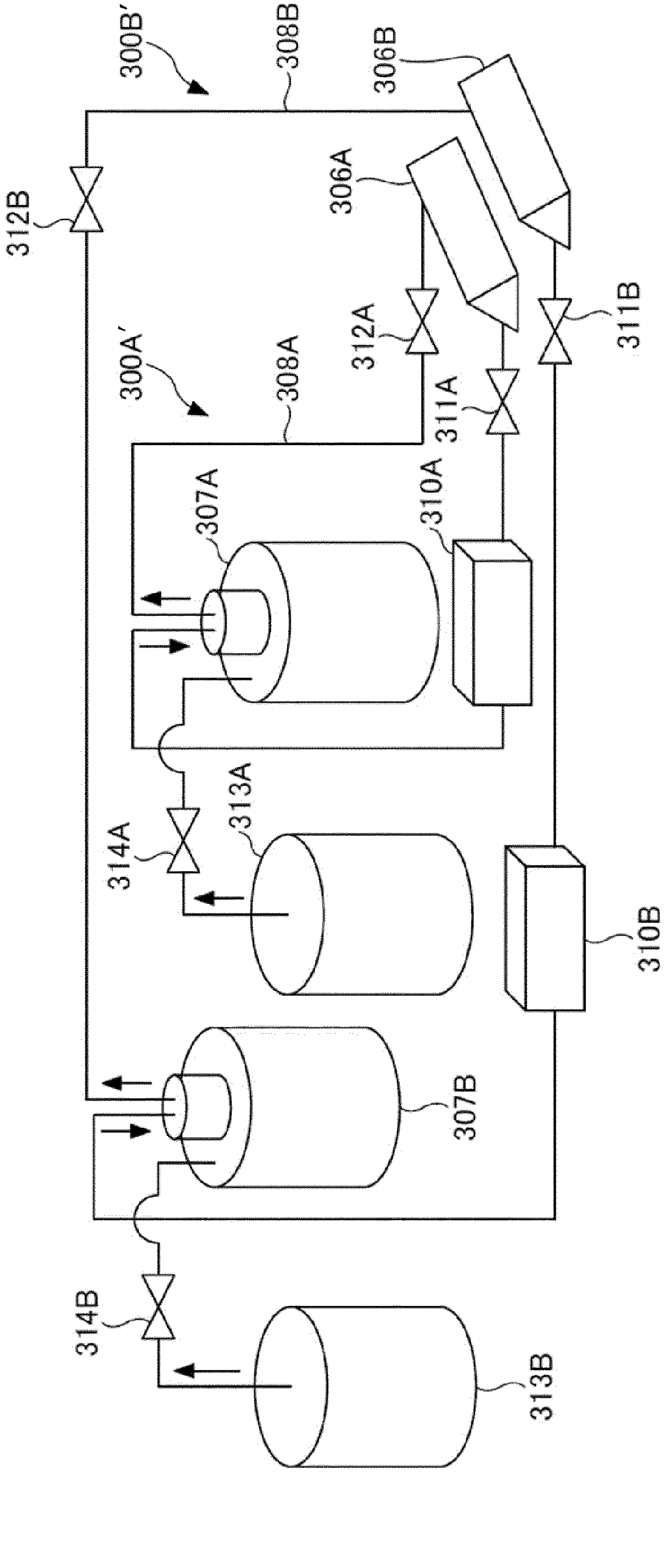
300B′
308B
306B
306A
312B
312A
311B
300A′
308A
311A
307A
310A
313A
314A
310B
307B
314B
313B

FIG. 11

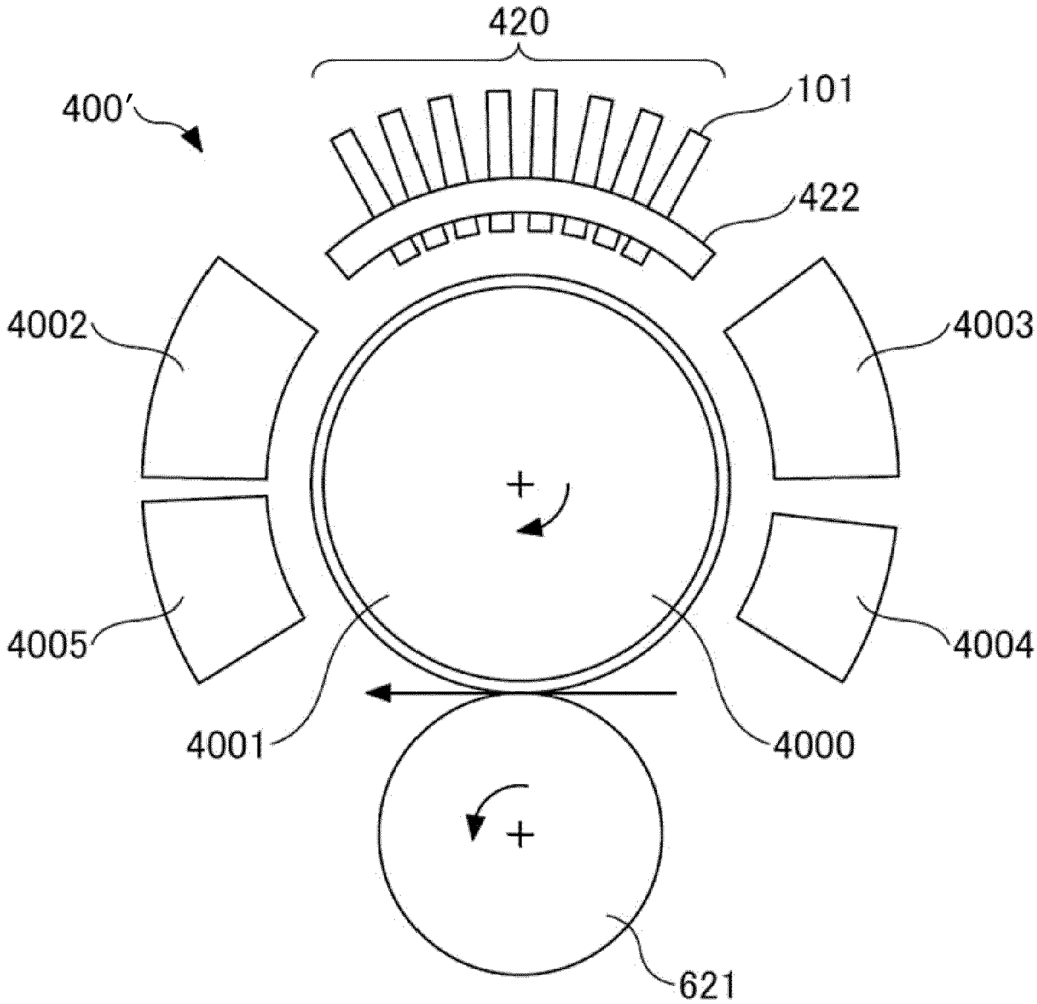

FIG. 12

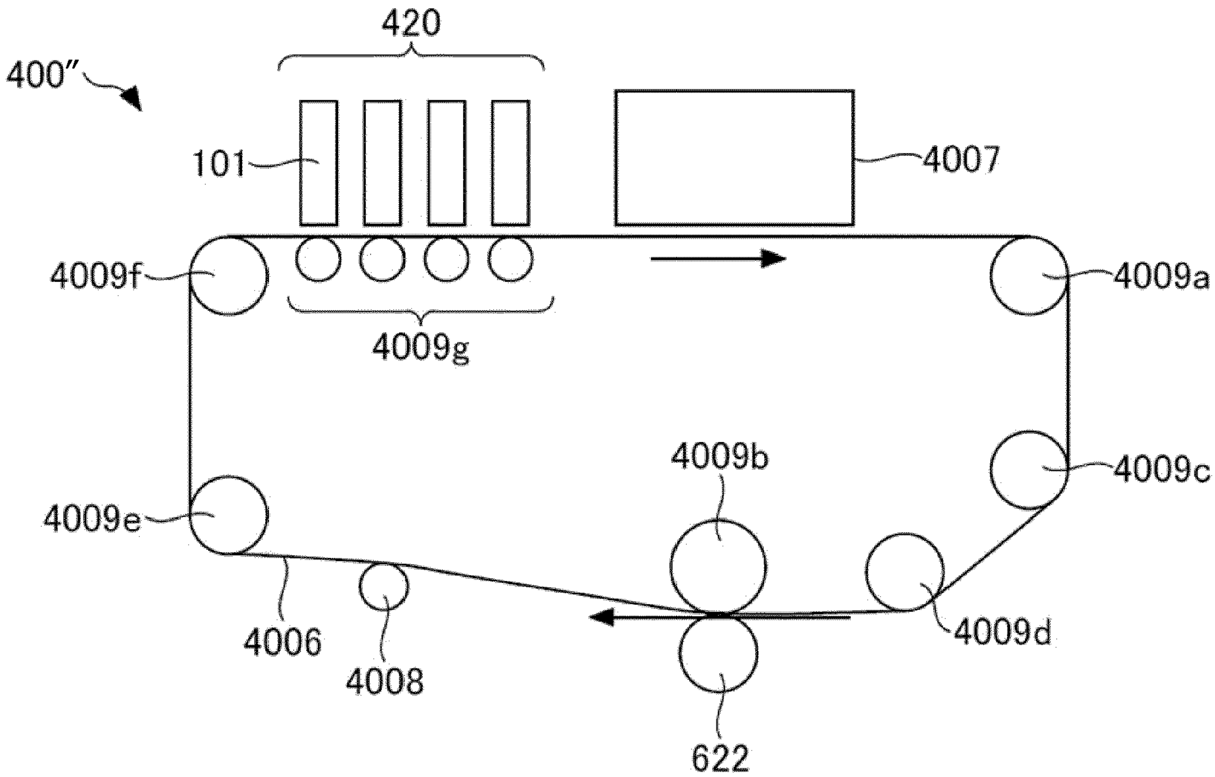
420
400″
101
4007
4009f
4009a
4009g
4009b
4009c
4009e
4009d
4006
4008
622

FIG. 13

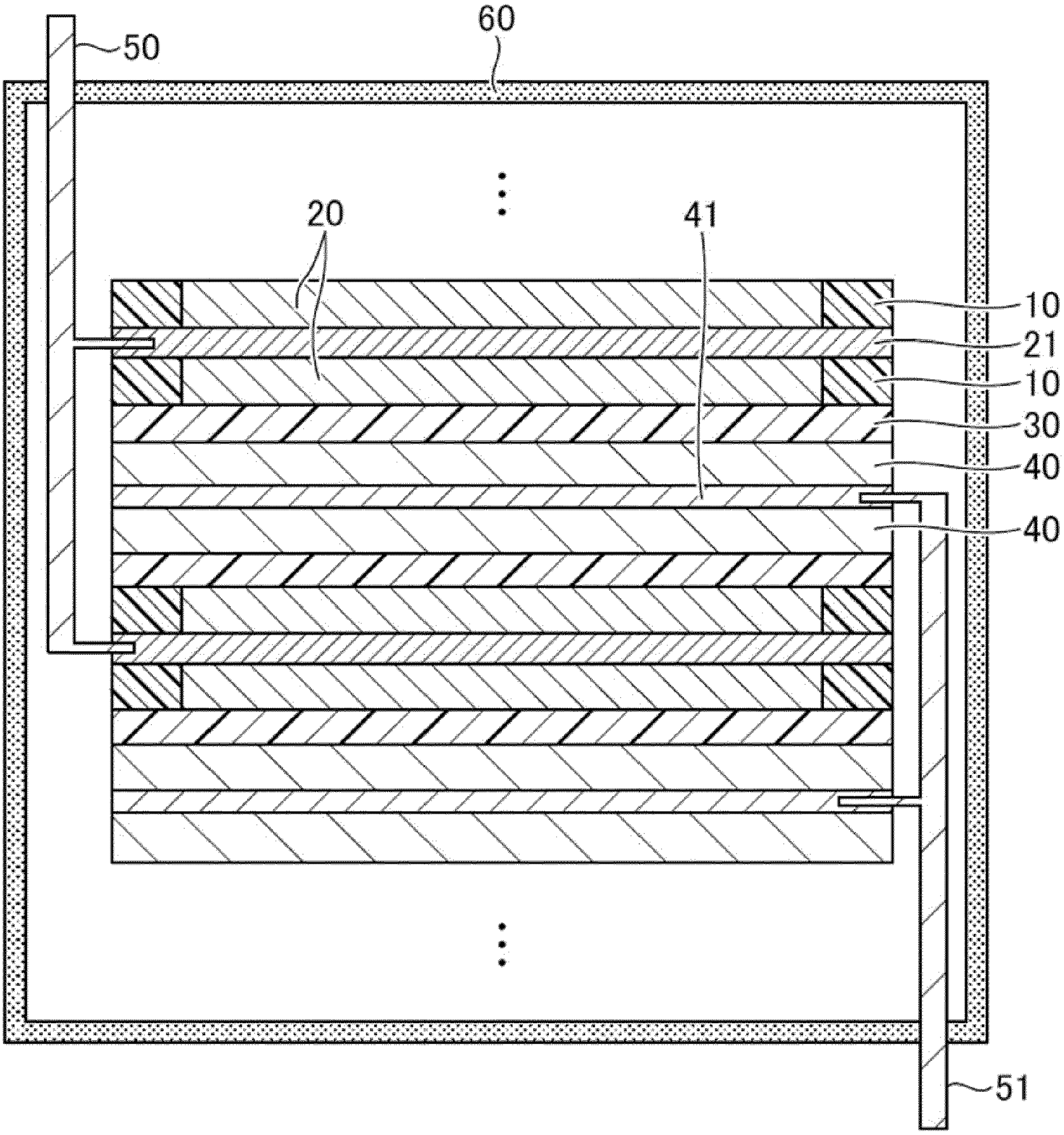

FIG. 14

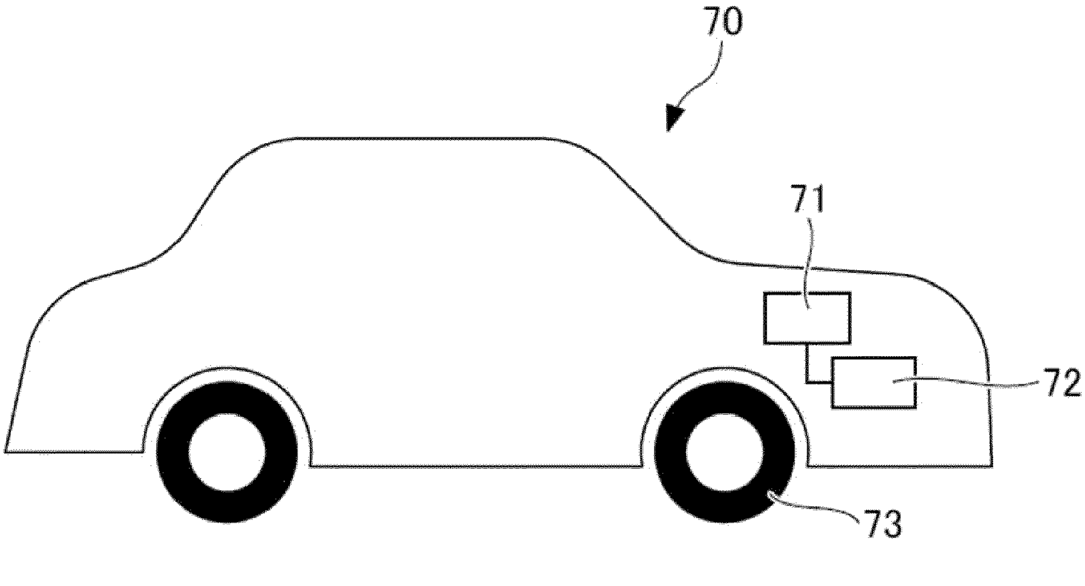

Europäisches Patentamt
European Patent Office
Office européen des brevets

# EUROPEAN SEARCH REPORT

Application Number
EP 24 16 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2022/407074 A1 (MASUZAWA MASAHIRO [JP] ET AL) 22 December 2022 (2022-12-22)<br>* paragraph; figure 9 * | 1,3-7, 9-11<br>2,8 | INV.<br>H01M4/04<br>H01M4/13<br>H01M4/131<br>H01M4/133<br>H01M4/134<br>H01M4/139<br>H01M4/1391<br>H01M4/1393<br>H01M4/1395<br>H01M10/0525<br>H01M10/054<br>H01M10/0562<br>H01M10/0585<br>H01M50/474<br>H01M50/477<br>H01M4/38<br>H01M10/052 |
| X<br>A | US 2020/243850 A1 (HIBINO EIKO [JP] ET AL) 30 July 2020 (2020-07-30)<br>* paragraphs [0024] - [0033], [0040] - [0049]; claim 8; figure 4 * | 1,3-7, 9-11<br>2,8 | |
| X<br>A | US 2012/231346 A1 (TSUJII YOSHINOBU [JP] ET AL) 13 September 2012 (2012-09-13)<br>* paragraphs [0169], [0171], [0202]; figure 7 * | 1,2,4,7, 9-11<br>3,5,6,8 | |
| X | US 2021/104778 A1 (ONO MASATO [JP] ET AL) 8 April 2021 (2021-04-08)<br>* paragraphs [0028] - [0030], [0040] - [0042]; figure 2 * | 8 | |
| X | US 2019/131603 A1 (PARK SANG JIN [KR] ET AL) 2 May 2019 (2019-05-02)<br>* paragraphs [0041] - [0048], [0067], [0068]; figure 1 * | 8 | TECHNICAL FIELDS SEARCHED (IPC)<br>H01M |

The present search report has been drawn up for all claims

1

| Place of search | Date of completion of the search | Examiner |
|---|---|---|
| Munich | 5 August 2024 | Bonetti, Serena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 16 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | H01M10/056 |
| | | | TECHNICAL FIELDS SEARCHED (IPC) |
| | | | |

The present search report has been drawn up for all claims

1

| Place of search | Date of completion of the search | Examiner |
|---|---|---|
| Munich | 5 August 2024 | Bonetti, Serena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 16 2522

This annex lists the patent family members relating to the patent documents cited in the above-mentioned European search report. The members are as contained in the European Patent Office EDP file on
The European Patent Office is in no way liable for these particulars which are merely given for the purpose of information.

05-08-2024

| Patent document cited in search report | Publication date | Patent family member(s) | Publication date |
|---|---|---|---|
| US 2022407074 A1 | 22-12-2022 | CN 114788036 A | 22-07-2022 |
| | | EP 4062468 A1 | 28-09-2022 |
| | | JP 2021082511 A | 27-05-2021 |
| | | KR 20220078702 A | 10-06-2022 |
| | | US 2022407074 A1 | 22-12-2022 |
| | | WO 2021100769 A1 | 27-05-2021 |
| US 2020243850 A1 | 30-07-2020 | CN 111490229 A | 04-08-2020 |
| | | US 2020243850 A1 | 30-07-2020 |
| US 2012231346 A1 | 13-09-2012 | CN 102576902 A | 11-07-2012 |
| | | EP 2493001 A1 | 29-08-2012 |
| | | JP 5705123 B2 | 22-04-2015 |
| | | JP WO2011049113 A1 | 14-03-2013 |
| | | KR 20120098728 A | 05-09-2012 |
| | | US 2012231346 A1 | 13-09-2012 |
| | | WO 2011049113 A1 | 28-04-2011 |
| US 2021104778 A1 | 08-04-2021 | CN 112599786 A | 02-04-2021 |
| | | DE 102020212239 A1 | 08-04-2021 |
| | | JP 7276689 B2 | 18-05-2023 |
| | | JP 2021057322 A | 08-04-2021 |
| | | KR 20210039951 A | 12-04-2021 |
| | | US 2021104778 A1 | 08-04-2021 |
| US 2019131603 A1 | 02-05-2019 | CN 109728355 A | 07-05-2019 |
| | | KR 20190048312 A | 09-05-2019 |
| | | US 2019131603 A1 | 02-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020022111 A
- JP 2021088691 A


### Non-patent literature cited in the description


- *J. Power Sources.,* 2018, vol. 396, 33-40
- *J. Mater. Chem. A.,* 2021, vol. 9, 4117-4125